(19) Europäisches Patentamt
European Patent Office
Office européen des brevets

(11) Veröffentlichungsnummer: **0 089 923**
**A2**

(12) # EUROPÄISCHE PATENTANMELDUNG


(21) Anmeldenummer: 83810104.6

(22) Anmeldetag: 14.03.83

(51) Int. Cl.³: C 09 B 62/04
D 06 P 3/66

(30) Priorität: 18.03.82 CH 1685/82

(43) Veröffentlichungstag der Anmeldung: 28.09.83 Patentblatt 83/39

(84) Benannte Vertragsstaaten: CH DE FR GB LI



(71) Anmelder: CIBA-GEIGY AG
Patentabteilung Postfach
CH-4002 Basel(CH)

(72) Erfinder: Scheibli, Peter, Dr.
Nussbaumweg 3
CH-4103 Bottmingen(CH)


(54) **Reaktivfarbstoffe, deren Herstellung und Verwendung.**


(57) Reaktivfarbstoffe der Formel

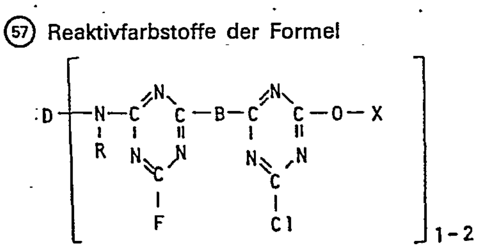

(1),

worin

D der Rest eines sulfogruppenhaltigen organischen Farbstoffes der Mono-oder Polyazo-, Metallkomplexazo-, Anthrachinon-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe, R Wasserstoff oder gegebenenfalls substituiertes $C_{1-4}$-Alkyl, B ein Brückenglied der Formel

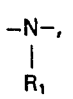, 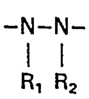 oder 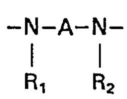

$R_1$ und $R_2$ unabhängig voneinander Wasserstoff oder gegebenenfalls substitueirtes $C_{1-4}$—Alkyl oder Phenyl, A ein gegebenenfalls substituiertes aliphatisches oder aromatisches Brückenglied, und X ein gegebenenfalls substituierter $C_{1-6}$-Alkylrest ist, eignen sich zum Fären und Bedrucken cellulosehaltiger und stickstoffhaltiger Fasermaterialien.


EP 0 089 923 A2

CIBA-GEIGY AG
Basel (Schweiz)

1-13853/=

Reaktivfarbstoffe, deren Herstellung und Verwendung

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand vielfach nicht voll befriedigen.

So ist häufig zu beobachten, dass der Fixiergrad nicht hoch genug ist, und zudem die Differenz zwischen Ausziehgrad und Fixiergrad zu gross ist (hoher Seifverlust), so dass ein erheblicher Teil des Reaktivfarbstoffes für den Färbevorgang verloren geht. Die Bereitstellung von verbesserten Reaktivfarbstoffen ist somit erwünscht. Der vorliegenden Erfindung lag daher die Aufgabe zugrunde, neue Reaktivfarbstoffe zu finden, die eine hohe Reaktivität besitzen, die aber den oben genannten Mangel nicht aufweisen, und die zudem besonders für das Ausziehfärbeverfahren geeignet sind. Es hat sich gezeigt, dass die weiter unten definierten neuen Reaktivfarbstoffe die gestellte Aufgabe weitgehend erfüllen.

Gegenstand der Erfindung sind Reaktivfarbstoffe der Formel

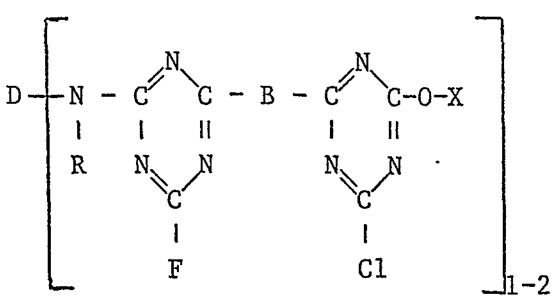

(1),

worin D der Rest eines sulfogruppenhaltigen organischen Farbstoffes der Mono- oder Polyazo-, Metallkomplexazo-, Anthrachinon-, Formazan-,

Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe,

R Wasserstoff oder gegebenenfalls substituiertes $C_{1-4}$-Alkyl,

B ein Brückenglied der Formel

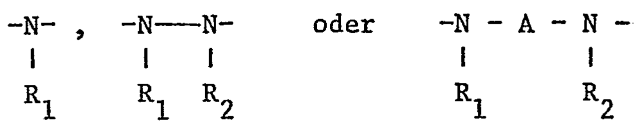

$R_1$ und $R_2$ unabhängig voneinander Wasserstoff oder gegebenenfalls substituiertes $C_{1-4}$-Alkyl oder Phenyl, A ein gegebenenfalls substituiertes aliphatisches oder aromatisches Brückenglied, und X ein gegebenenfalls substituierter $C_{1-6}$-Alkylrest ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Acetylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Als Reste $R_1$ und $R_2$ kommen z.B. die gleichen unsubstituierten oder substituierten Alkylreste in Betracht, die oben für R genannt sind. Sofern $R_1$ oder $R_2$ Phenyl ist, kann dieses weitersubstituiert sein, z.B. durch Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo.

Das aliphatische oder aromatische Brückenglied A ist vorzugsweise ein Alkylen- oder Arylenrest. Der Ausdruck aliphatisches Brückenglied schliesst auch cycloaliphatische Reste ein.

So kann A ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen.

Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen oder Phenylen.

Bevorzugt ist der Aethylenrest und der Phenylenrest.

Der gegebenenfalls substituierte $C_{1-6}$-Alkylrest X ist z.B. ein Alkylrest, der geradkettig oder verzweigt ist und der weitersubstituiert sein kann, z.B. durch Halogen, Hydroxy, Cyan, Alkoxy, Carboxy oder Sulfo, oder ein Cyclohexylrest.

Als Beispiele für X seien die folgenden Substituenten genannt: Methyl, Aethyl, Propyl, Isopropyl, Butyl, Isobutyl, sek.-Butyl, tert.-Butyl, Pentyl, Hexyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Benzyl und Phenäthyl.

Vorzugsweise ist X ein unsubstituierter Alkylrest mit 1 bis 4 Kohlenstoffatomen. Insbesondere ist X Methyl, Aethyl, Propyl, Isopropyl, β-Methoxyäthyl oder β-Aethoxyäthyl.

Bevorzugte Untergruppen der Reaktivfarbstoffe der Formel (1) sind:

a) Reaktivfarbstoffe der Formel (1), worin B ein Brückenglied der Formel

$$\begin{array}{ccccc} -\,N & - & A & - & N\,- \\ | & & & & | \\ R_1 & & & & R_2 \end{array}$$

ist, und D, R, $R_1$, $R_2$, A und X die unter Formel (1) angegebenen Bedeutungen haben.

b) Reaktivfarbstoffe gemäss a), worin D die unter a) angegebene Bedeutung hat, und R Wasserstoff, Methyl oder Aethyl, $R_1$ und $R_2$ Wasserstoff, A $C_{2-6}$-Alkylen oder gegebenenfalls substituiertes Phenylen, und X $C_{1-6}$-Alkyl oder $C_{1-4}$-Alkoxy-$C_{1-4}$-alkyl ist.

c) Reaktivfarbstoffe gemäss b), der Formel

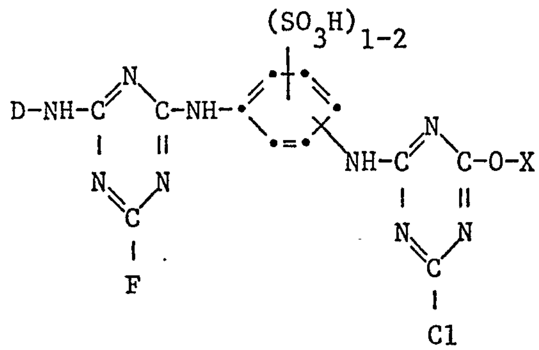

(2) ,

worin D und X die unter b) angegebenen Bedeutungen haben.

d) Reaktivfarbstoffe gemäss b), der Formel

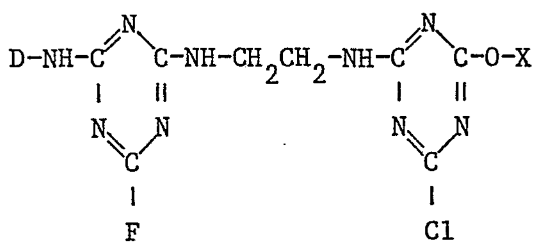

(3),

worin D und X die unter b) angegebene Bedeutungen haben.

e) Reaktivfarbstoffe gemäss c) oder d), worin X Isopropyl oder β-Aethoxyäthyl ist.

f) Reaktivfarbstoffe gemäss a) bis e), worin D der Rest eines Mono- oder Disazofarbstoffes ist.

g) Reaktivfarbstoffe gemäss a) bis e), worin D der Rest eines Metallkomplexazo- oder Formazanfarbstoffes ist.

h) Reaktivfarbstoffe gemäss a) bis e), worin D der Rest eines Anthrachinonfarbstoffes ist.

i) Reaktivfarbstoffe gemäss g), worin D der Rest eines Metallkomplexazofarbstoffes der Benzol- oder Naphthalinreihe ist.

j) Reaktivfarbstoffe gemäss i), worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

k) Reaktivfarbstoffe gemäss f), der Formel

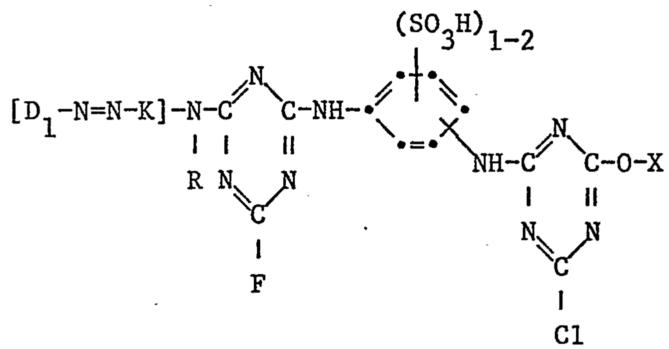

(4) ,

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff oder gegebenenfalls substituiertes $C_{1-4}$-Alkyl, und X Isopropyl oder β-Aethoxyäthyl ist, und der Reaktivrest an die Diazokomponente oder an die Kupplungskomponente gebunden ist.

l) Reaktivfarbstoffe gemäss k), worin R Wasserstoff oder Methyl ist.

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

D - N - H (5)
|
R

oder ein Farbstoffvorprodukt, 2,4,6-Trifluor-s-triazin, eine Verbindung der Formel

H - B - H (6)

und eine Verbindung der Formel

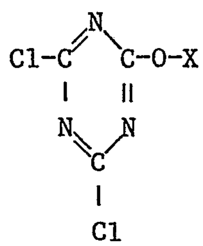 (7)

kondensiert, wobei D, R, B und X in den oben genannten Formeln die unter Formel (1) angegebenen Bedeutungen haben, und dass man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:

1. einen organischen Farbstoff der Formel (5) mit 2,4,6-Trifluor-s-triazin kondensiert, dass man ferner eine Verbindung der Formel (6) mit einer Verbindung der Formel (7) kondensiert, und beide Zwischenprodukte miteinander kondensiert;

2. einen organischen Farbstoff der Formel (5) mit 2,4,6-Trifluor-s-triazin kondensiert, das primäre Kondensationsprodukt mit einer Verbindung der Formel (6) kondensiert, und das erhaltene sekundäre Kondensationsprodukt mit einer Verbindung der Formel (7) kondensiert;

3. eine Verbindung der Formel (6) mit einer Verbindung der Formel (7) kondensiert, das primäre Kondensationsprodukt mit 2,4,6-Trifluor-s-triazin kondensiert, und das entstandene Zwischenprodukt mit einem organischen Farbstoff der Formel (5) kondensiert;

4. 2,4,6-Trifluor-s-triazin mit einer Verbindung der Formel (6) kondensiert, das primäre Kondensationsprodukt mit einem organischen Farbstoff der Formel (5) kondensiert, und das erhaltene sekundäre Kondensationsprodukt in letzter Stufe mit einer Verbindung der Formel (7) kondensiert.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (5), die eine Gruppe -N(R)H enthält, und 2,4,6-Trifluor-s-triazin kondensiert, und in einer geeigneten Stufe des Verfahrens, gegebenenfalls auch vorher, mit einer Verbindung der Formel (6) und mit der anderen (bzw. den übrigen) Komponente(n) des Farbstoffs der

Formel (5) und der Verbindung der Formel (7) umsetzt.

Beispiele für derartige, aus zwei oder mehr als zwei Komponenten zusammengesetzte organische Farbstoffe sind: Monoazo-, Disazo-, Trisazo-, Tetrazo-, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe -N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit den Verbindungen der Formeln (6) und (7) kondensiert.

Die zweite Variante ist dadurch gekennzeichnet, dass man eine Kupplungskomponente des Farbstoffs, die eine Gruppe -N(R)H enthält, mit 2,4,6-Trifluor-s-triazin kondensiert, und auf das so erhaltene Kondensationsprodukt eine diazotierte Diazokomponente kuppelt, und vor oder nach der Kondensation oder nach der Kupplung mit den Verbindungen der Formeln (6) und (7) kondensiert.

Nach diesen Verfahrensvarianten können Reaktivfarbstoffe der Formel (1), die zwei Reaktivreste enthalten, hergestellt werden, indem man eine Diazokomponente, die eine Gruppe -N(R)H enthält, mit 2,4,6-Trifluor-s-triazin kondensiert, dass man ferner eine Kupplungskomponente, die eine Gruppe -N(R)H enthält, mit 2,4,6-Trifluor-s-triazin

kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit Verbindungen der Formeln (6) und (7) kondensiert.

Farbstoffe der Formel (1), die zwei Reaktivreste enthalten, sind auch in der Weise herstellbar, dass man Farbstoffe der Formel (5) verwendet, die in D eine weitere Gruppe -N(R)H enthalten, diese mit einer entsprechenden Menge 2,4,6-Trifluor-s-triazin kondensiert, so dass zwei Fluortriazinreste in das Farbstoffmolekül eingeführt werden, und dann mit entsprechenden Mengen der Verbindungen der Formeln (6) und (7) kondensiert.

Falls die fertigen Reaktivfarbstoffe der Formel (1) komplexbildende Gruppen enthalten, können sie nachträglich mit schwermetallabgebenden Mitteln umgesetzt werden.

Die Kondensation des 2,4,6-Trifluor-s-triazins mit den organischen Farbstoffen der Formel (5) bzw. den eine Gruppe -N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Verbindungen der Formel (6) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in

einem pH-Bereich von 2 bis 8, bevorzugt 5 bis 6,5, durchgeführt.

Die Kondensation des Fluortriazins mit einer Verbindung der Formel (6) kann vor oder nach der Kondensation des Fluortriazins mit einem Farbstoff der Formel (5) geschehen. Die Kondensation des Fluortriazins mit einer Verbindung der Formel (6) erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Die Kondensation der Verbindungen der Formeln (6) und (7) erfolgen ebenfalls vorzugsweise in wässriger Lösung oder Supension, bei niedrigen Temperaturen, und bei schwach saurem, neutralem bis schwach alkalischem pH-Wert, sowie in Gegenwart eines säurebindenden Mittels.

Im folgenden sollen mögliche Ausgangsstoffe, die zur Herstellung der Reaktivfarbstoffe der Formel (1) verwendet werden können, einzeln genannt werden.

Als Farbstoffe der Formel (5) kommen besonders Farbstoffe der folgenden Strukturtypen in Betracht:

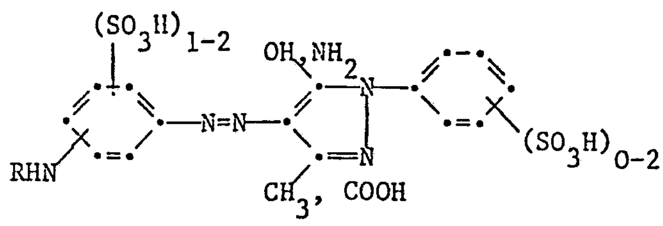

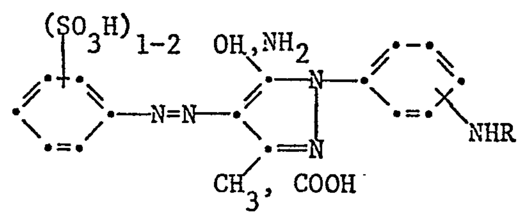

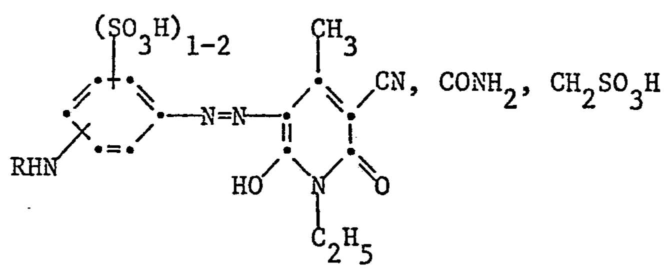

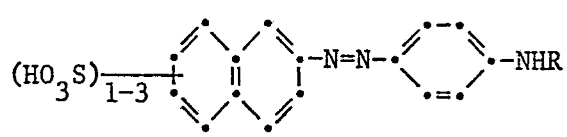

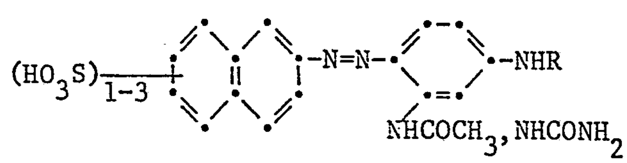

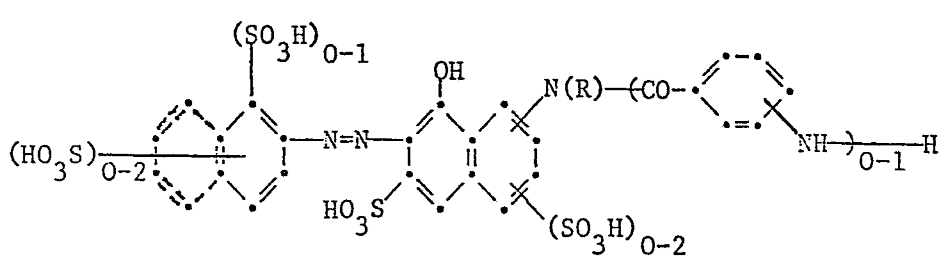

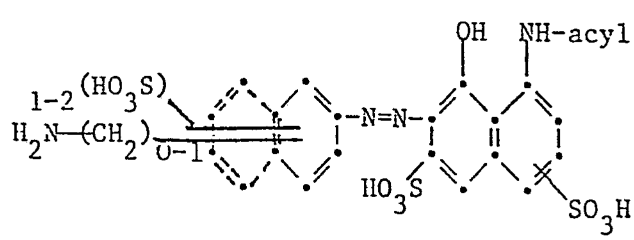

worin acyl z.B. Acetyl oder gegebenenfalls substituiertes Benzoyl ist.

Metallkomplexe von Farbstoffen der Formeln:

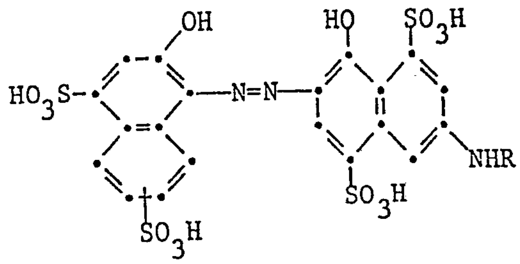

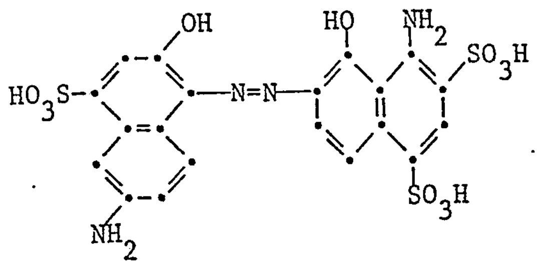

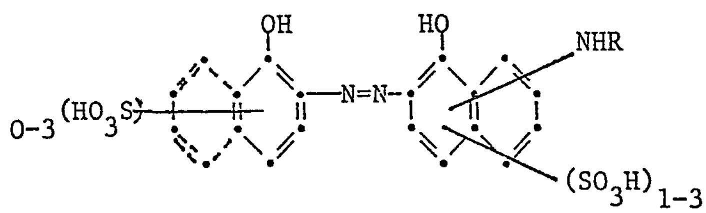

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

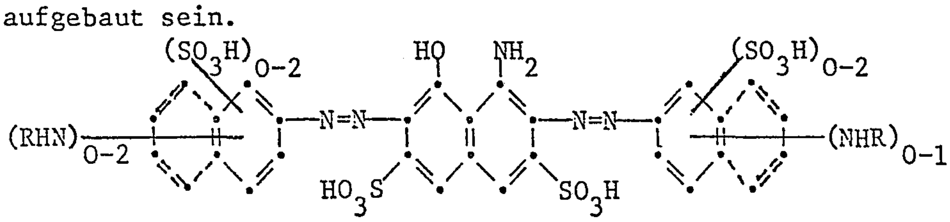

Die durch Strichelungen angedeuteten kondensierten Ringe stehen für alternativ mögliche Naphthalinsysteme.

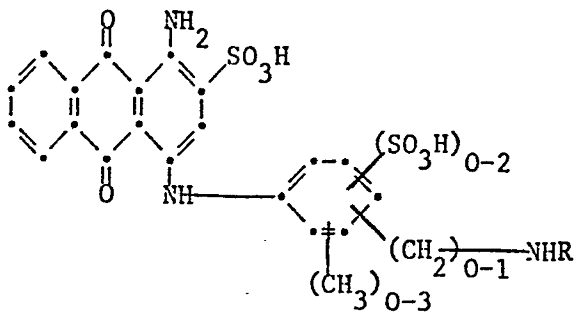

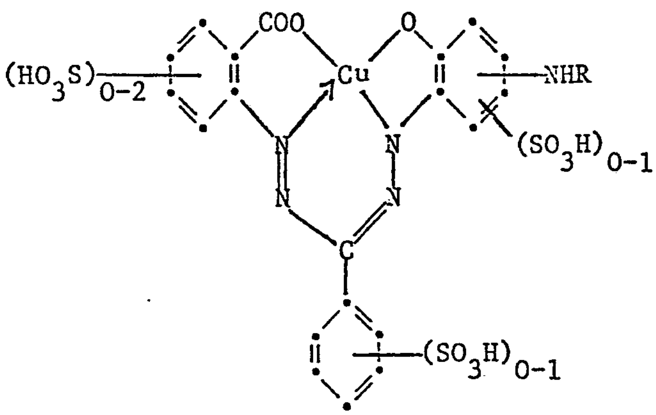

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (5) sind die folgenden:

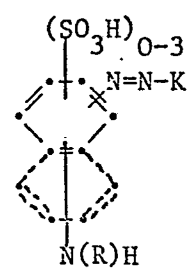

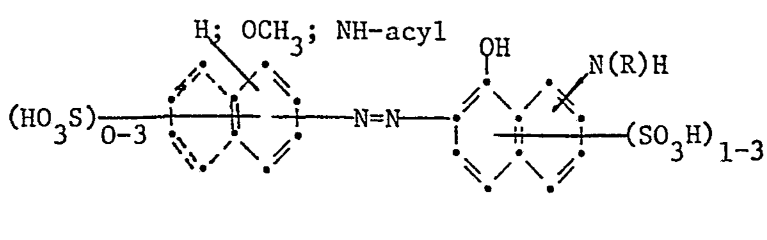

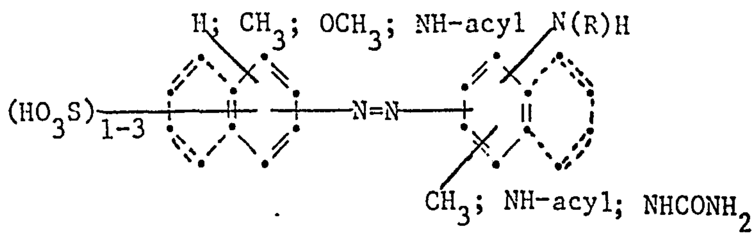

und

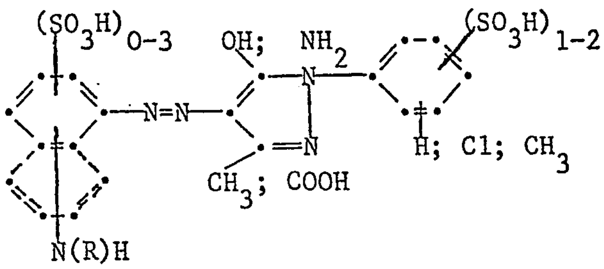

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

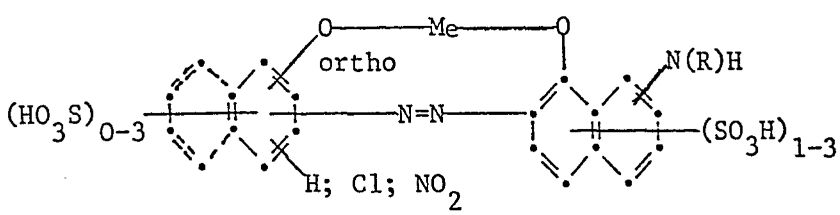

und

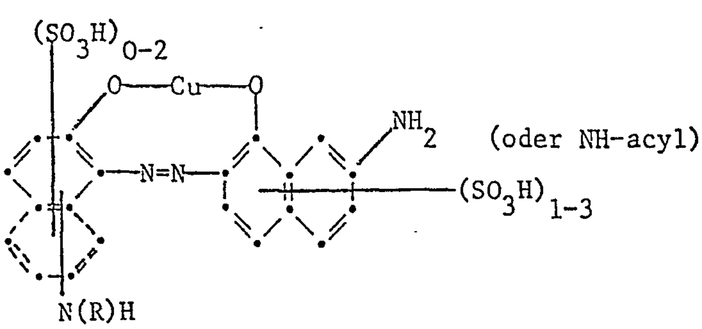

worin R und acyl die oben angegebenen Bedeutungen haben und Me für Cu, Cr oder Co steht.

2,4,6-Trifluor-s-triazin (Cyanurfluorid).

Verbindungen der Formel (6): Ammoniak, Methylamin, Aethylamin, Propylamin, Isopropylamin, Butylamin, Amylamin, β-Chlor- oder β-Bromäthylamin, β-Cyanäthylamin, β-Hydroxyäthylamin, γ-Hydroxypropylamin, Methoxymethylamin, β-Methoxyäthylamin, γ-Methoxypropylamin, Aethoxymethylamin, β-Aethoxyäthylamin, γ-Aethoxypropylamin, γ-Isopropoxypropylamin, Benzylamin, Anilin, Hydrazin, Methylhydrazin, Phenylhydrazin, Sulfophenylhydrazin, Methylendiamin, Aethylendiamin, n-Propylendiamin, n-Butylendiamin, 1-Methyl-n-propylendiamin, n-Hexylendiamin, 2-Aethyl-n-butylendiamin, 2-Hydroxy-n-propylendiamin, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, Piperazin.

Die Verbindungen der Formel (7) werden in bekannter Weise durch Kondensation von 2,4,6-Trichlor-s-triazin mit entsprechenden Hydroxyverbindungen hergestellt. Als Beispiele verwendbarer Hydroxyverbindungen seien genannt: Methanol, Aethanol, Propanol, Isopropanol, n-Butanol, Isobutanol, sek.-Butanol, tert.-Butanol, Pentanol, Hexanol, Cyclohexanol, β-Methoxyäthanol, β-Aethoxy-äthanol, γ-Methoxy-propanol, γ-Aethoxypropanol, β-Aethoxy-β-äthoxy-äthanol, Glycolsäure.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothiop-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3-oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonapthalin, 2- Aminonaphthalin, 1-Aminonapthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxy-pyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich für das Ausziehverfahren, wobei mit Dreistufen-Färbeverfahren besonders gute Ergebnisse erzielt werden. Dabei ist eine Ausziehstufe bei neutralem pH-Wert gefolgt von zwei sich im pH-Wert und/oder Temperatur unterscheidenden alkalischen Fixierstufen. Ebenso eignen sie sich

zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d.h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1: 16,4 Teile des Farbstoffes der Formel

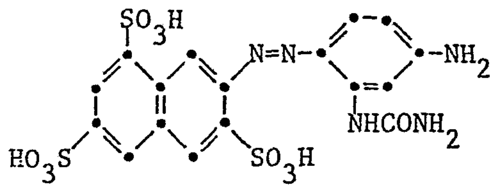

werden in 400 ml Wasser neutral gelöst und die Lösung auf 0 bis 5° C abgekühlt. Bei dieser Temperatur werden 4,3 Teile 2,4,6-Trifluor-1,3,5-triazin innert 15 Minuten zugetropft, wobei der pH der Reaktionsmischung durch gleichzeitige Zugabe von 2n Natriumhydroxydlösung bei 6,5 bis 7,0 gehalten wird. Nach Zusatz einer neutralen Mischung von 7,6 Teilen 2-(β-Aminoäthylamino)-4-chlor-6-isopropoxy-1,3,5-triazin und 50 ml Wasser wird die Temperatur innert 2 bis 3 Stunden auf 20 bis 25° C erhöht und dabei der pH der Reaktionsmischung durch ständige Zugabe von 2n Natriumhydroxydlösung bei 7,0 bis 7,5 gehalten. Nach vollständiger Reaktion wird die Reaktionsmischung geklärt und der gebildete Reaktivfarbstoff bei pH 6,5 durch Einstreuen von Kaliumchlorid ausgesalzen, filtriert, gewaschen und im Vakuum getrocknet. Er färbt Baumwolle in rotstichigen Gelbtönen und eignet sich besonders für Dreistufen-Färbeverfahren.

Elementaranalyse einer 65,3 prozentigen Charge:

| | | | | | |
|---|---|---|---|---|---|
| berechnet: | C 25,2 % | N 13,6 % | S 7,2 % | Cl 2,7 % | F 1,4 % |
| gefunden: | C 25,2 % | N 13,0 % | S 7,7 % | Cl* 2,4 % | F** 1,4 % |

* Differenz: Gesamtchlor minus anorganisch gebundenes Chlor

** Differenz: Gesamtfluor minus anorganisch gebundenes Fluor.

Beispiel 2: Analog Beispiel 1 wird der Reaktivfarbstoff der Formel

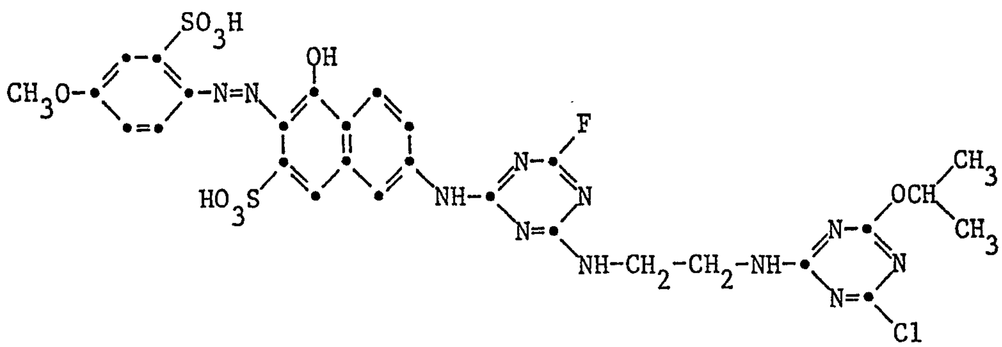

erhalten. Er färbt Baumwolle in Scharlachtönen und eignet sich besonders für Dreistufen-Färbeverfahren.

Elementaranalyse einer 62,4 prozentigen Charge:

| | | | | |
|---|---|---|---|---|
| berechnet: | C 26,9 % | N 12,3 % | Cl 2,8 % | F 1,5 % |
| gefunden: | C 26,9 % | N 11,8 % | Cl* >2,8 % | F** 1,4 %. |

Beispiel 3: Analog Beispiel 1 wird der Reaktivfarbstoff der Formel

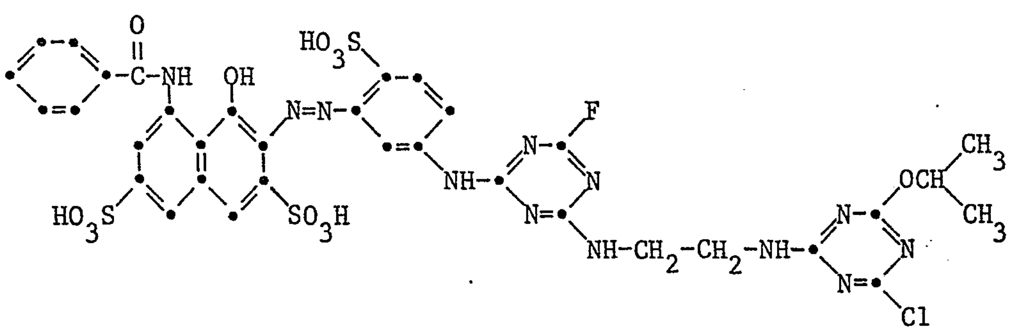

erhalten. Er färbt Baumwolle in blaustichigen Rottönen und eignet sich besonders für Dreistufen-Färbeverfahren.

Elementaranalyse einer 64,4 prozentigen Charge:

| | | | |
|---|---|---|---|
| berechnet: | C 27,7 % | Cl 2,4 % | F 1,3 % |
| gefunden: | C 27,7 % | Cl* 2,1 % | F** 1,1 %. |

Weitere Reaktivfarbstoffe, die Baumwolle in den in Tabelle 1 Spalte 4 angegebenen Farbtönen färben, und die sich besonders für Dreistufen-

Färbeverfahren eignen, werden erhalten, wenn man die in Spalte 2 angegebenen aminogruppenhaltigen Chromophore gemäss den Angaben in Beispiel 1 zuerst mit 2,4,6-Trifluor-1,3,5-triazin und dann mit der in Spalte 3 angegebenen aminogruppenhaltigen Triazin-Verbindung umsetzt.

Tabelle 1

| Nr. | Chromophor | Triazin-Verbindung | Farbton auf Baumwolle |
|---|---|---|---|
| 1 | 2-Aminonaphthalin-1,5-disulfonsäure → 2-Amino-5-hydroxy-naphthalin-7-sulfonsäure | 2-(β-Aminoäthyl-amino)-4-chlor-6-isopropoxy-1,3,5-triazin | orange |
| 2 | 1-Amino-3-acetylaminobenzol-6-sulfonsäure → 1-Amino-8-hydroxy-2-(4'-sulfophenylazo)-naphthalin-3,6-disulfonsäure, verseift | 2-(β-Aminoäthyl-amino)-4-chlor-6-isopropoxy-1,3,5-triazin | marineblau |
| 3 | N-(2-Carboxy-5-sulfophenyl)-N'-(2'-hydroxy-3'-amino-5'-sulfophenyl)-ms -phenylformazan, Cu-Komplex | 2-(β-Aminoäthyl-amino)-4-chlor-6-isopropoxy-1,3,5-triazin | blau |
| 4 | 2-Amino-3,6,8-trisulfonsäure → 3-Aminophenyl-harnstoff | 2-(4'-Amino-2',5'-disulfophenyl-amino)-4-chlor-6-isopropoxy-1,3,5-triazin | rotstichig gelb |
| 5 | 2-Amino-3,6,8-trisulfonsäure → 3-Aminophenyl-harnstoff | 2-Methylhydrazino-4-chlor-6-isopropoxy—1,3,5-triazin | rotstichig gelb |
| 6 | 1-Amino-4-methoxybenzol-2-sulfonsäure → 2-Amino-5-hydroxy-naphthalin-7-sulfonsäure | 2-Methylhydrazino-4-chlor-6-isopropoxy-1,3,5-triazin | scharlach |
| 7 | 1-Amino-3-acetylaminobenzol-6-sulfonsäure → 1-Amino-8-hydroxy-2-(4'-sulfophenylazo)-naphthalin-3,6-disulfonsäure, verseift | 2-Methylhydrazino-4-chlor-6-isopropoxy-1,3,5-triazin | marineblau |

Tabelle 1 (Fortsetzung)

| Nr. | Chromophor | Triazin-Verbindung | Farbton auf Baumwolle |
|---|---|---|---|
| 8 | 2-Aminonaphthalin-3,6,8-trisulfonsäure → 1-Amino-3-acetylaminobenzol | 2-(β-Aminoäthylamino)-4-chlor-6-isopropoxy-1,3,5-triazin | rotstichig gelb |
| 9 | 1-Amino-3-acetylaminobenzol-6-sulfonsäure → 1-Aethyl-3-sulfomethyl-4-methyl-6-hydroxy-pyridon-(2)-5-carbonsäureamid, verseift | 2-(β-Aminoäthylamino)-4-chlor-6-isopropoxy-1,3,5-triazin | gelb |
| 10 | 1-Amino-3-acetylaminobenzol-6-sulfonsäure → 1-Aethyl-3-aminocarbonyl-4-methyl-6-hydroxy-pyridon-(2), verseift | 2-(β-Aminoäthylamino)-4-chlor-6-isopropoxy-1,3,5-triazin | gelb |
| 11 | 2-Aminonaphthalin-3,6,8-trisulfonsäure → 2-Acetylamino-5-hydroxynaphthalin-7-sulfonsäure, (verseift) | 2-(β-Aminoäthylamino)-4-chlor-6-isopropoxy-1,3,5-triazin | orange |
| 12. | 1-Amino-4-methoxybenzol-2-sulfonsäure → 2-Methylamino-5-hydroxynaphthalin-7-sulfonsäure | 2-(β-Aminoäthylamino)-4-chlor-6-isopropoxy-1,3,5-triazin | scharlach |
| 13 | 1-Amino-4-acetylaminobenzol-2-sulfonsäure → saure 2-Amino-8-hydroxynaphthalin-6-sulfonsäure, verseift | 2-(β-Aminoäthylamino)-4-chlor-6-isopropoxy-1,3,5-triazin | blaustichig rot<br>blaustichig rot |
| 14 | 2-Aminonaphthalin-1,5-disulfonsäure → 1-Amino-8-hydroxynaphthalin-3,6-disulfonsäure | 2-(β-Aminoäthylamino)-4-chlor-6-isopropoxy-1,3,5-triazin | blaustichig rot |

Tabelle 1 (Fortsetzung)

| Nr. | Chromophor | Triazin-Verbindung | Farbton auf Baumwolle |
|---|---|---|---|
| 15 | 1-Amino-3-acetylaminobenzol-6-sulfonsäure ⟶ 1-Amino-8-hydroxy-2-(2',5'-disulfophenylazo)-naphthalin-3,6-disulfonsäure, verseift | 2-(β-Aminoäthylamino)-4-chlor-6-isopropoxy-1,3,5-triazin | blau |
| 16 | N-(2-Carboxy-4-sulfophenyl)-N'-(2'-hydroxy-3'-amino-5'-sulfophenyl)-ms-phenylformazan (Cu-Komplex) | 2-(β-Aminoäthylamino)-4-chlor-6-isopropoxy-1,3,5-triazin | blau |
| 17 | 1/2 Aequivalent 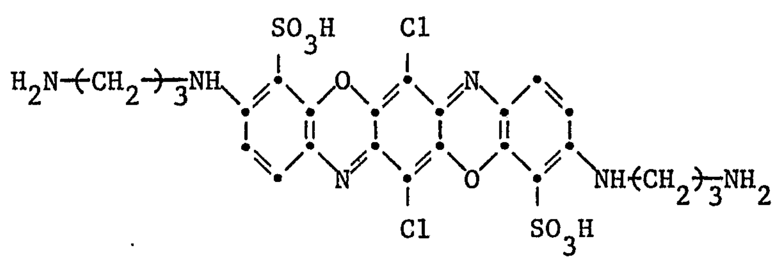 | 2-(β-Aminoäthylamino)-4-chlor-6-isopropoxy-1,3,5-triazin | blau |
| 18 | 1/2 Aequivalent 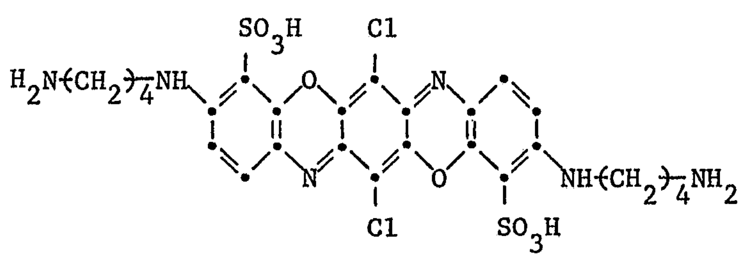 | 2-(β-Aminoäthylamino)-4-chlor-6-isopropoxy-1,3,5-triazin | blau |

Tabelle 1 (Fortsetzung)

| Nr. | Chromophor | Triazin-Verbindung | Farbton auf Baumwolle |
|---|---|---|---|
| 19 | 2-Aminonaphthalin-3,6,8-trisulfonsäure → 1-Amino-3-acetylaminobenzol | 2-(4'-Amino-2',5'-disulfophenyl-amino)-4-chlor-6-isopropoxy-1,3,5-triazin | rotstichig gelb |
| 20 | 1-Amino-3-acetylaminobenzol-6-sulfonsäure → 1-Aethyl-3-sulfomethyl-4-methyl-6-hydroxy-pyridon-(2)-5-carbonsäureamid, verseift | 2-(4'-Amino-2',5'-disulfophenyl-amino)-4-chlor-6-isopropoxy-1,3,5-triazin | gelb |
| 21 | 1-Amino-3-acetylaminobenzol-6-sulfonsäure → 1-Aethyl-3-aminocarbonyl-4-methyl-6-hydroxy-pyridon-(2), verseift | 2-(4'-Amino-2',5'-disulfophenyl-amino)-4-chlor-6-isopropoxy-1,3,5-triazin | gelb |
| 22 | 2-Aminonaphthalin-1,5-disulfonsäure → 2-Acetylamino-5-hydroxynaphthalin-7-sulfonsäure (verseift) | 2-(4'-Amino-2',5'-disulfophenyl-amino)-4-chlor-6-isopropoxy-1,3,5-triazin | orange |
| 23 | 2-Aminonaphthalin-3,6,8-trisulfonsäure → 2-Acetylamino-5-hydroxynaphthalin-7-sulfonsäure (verseift) | 2-(4'-Amino-2',5'-disulfophenyl-amino)-4-chlor-6-isopropoxy-1,3,5-triazin | orange |
| 24 | 1-Amino-4-methoxybenzol-2-sulfonsäure → 2-Amino-5-hydroxynaphthalin-7-sulfonsäure | 2-(4'-Amino-2',5'-disulfophenyl-amino)-4-chlor-6-isopropoxy-1,3,5-triazin | scharlach |
| 25 | 1-Amino-4-methoxybenzol-2-sulfonsäure → 2-Methylamino-5-hydroxynaphthalin-7-sulfonsäure | 2-(4'-Amino-2',5'-disulfophenyl-amino)-4-chlor-6-isopropoxy-1,3,5-triazin | scharlach |

Tabelle 1 (Fortsetzung)

| Nr. | Chromophor | Triazin-Verbindung | Farbton auf Baumwolle |
|---|---|---|---|
| 26 | 1-Amino-3-acetylaminobenzol-6-sulfonsäure → 1-Benzoylamino-8-hydroxynaphthalin-3,6-disulfonsäure, verseift | 2-(4'-Amino-2',5'-disulfophenylamino)-4-chlor-6-isopropoxy-1,3,5-triazin | blaustichig rot |
| 27 | 1-Amino-4-acetylaminobenzol-2-sulfonsäure → saure 2-Amino-8-hydroxynaphthalin-6-sulfonsäure, verseift | 2-(4'-Amino-2',5'-disulfophenylamino)-4-chlor-6-isopropoxy-1,3,5-triazin | blaustichig rot |
| 28 | 2-Aminonaphthalin-1,5-disulfonsäure → 1-Amino-8-hydroxynaphthalin-3,6-disulfonsäure | 2-(4'-Amino-2',5'-disulfophenylamino)-4-chlor-6-isopropoxy-1,3,5-triazin | blaustichig rot |
| 29 | 1-Amino-3-acetylaminobenzol-6-sulfonsäure → 1-Amino-8-hydroxy-2-(4'-sulfophenylazo)-naphthalin-3,6-disulfonsäure, verseift | 2-(4'-Amino-2',5'-disulfophenylamino)-4-chlor-6-isopropoxy-1,3,5-triazin | blau |
| 30 | 1-Amino-3-acetylaminobenzol-6-sulfonsäure → 1-Amino-8-hydroxy-2-(2',5'-disulfophenylazo)-naphthalin-3,6-disulfonsäure, verseift | 2-(4'-Amino-2',5'-disulfophenylamino)-4-chlor-6-isopropoxy-1,3,5-triazin | blau |
| 31 | N-(2-Carboxy-4-sulfophenyl)-N'-(2'-hydroxy-3'-amino-5'-sulfophenyl)-ms-phenylformazan (Cu-Komplex) | 2-(4'-Amino-2',5'-disulfophenylamino)-4-chlor-6-isopropoxy-1,3,5-triazin | blau |
| 32 | N-(2-Carboxy-5-sulfophenyl)-N'-(2'-hydroxy-3'-amino-5'-sulfophenyl)-ms-phenylformazan (Cu-Komplex) | 2-(4'-Amino-2',5'-disulfophenylamino)-4-chlor-6-isopropoxy-1,3,5-triazin | blau |

Tabelle 1 (Fortsetzung)

| Nr. | Chromophor | Triazin-Verbindung | Farbton auf Baumwolle |
|---|---|---|---|
| 33 | 1/2 Aequivalent 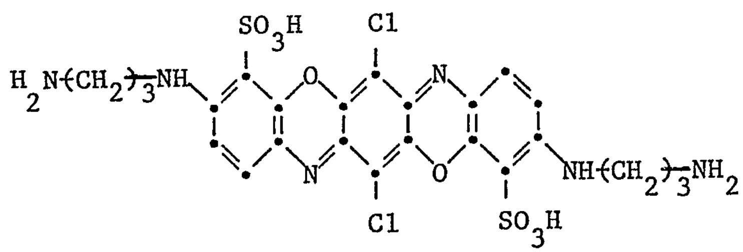 | 2-(4'-Amino-2',5'-disulfophenyl-amino)-4-chlor-6-isopropoxy-1,3,5-triazin | blau |
| 34 | 1/2 Aequivalent 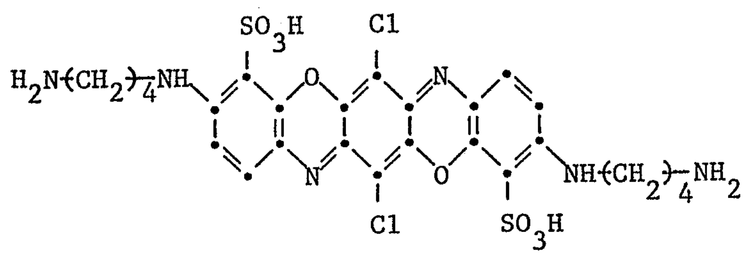 | 2-(4'-Amino-2',5'-disulfophenyl-amino)-4-chlor-6-isopropoxy-1,3,5-triazin | blau |
| 35 | 2-Aminonaphthalin-3,6,8-trisulfonsäure → 1-Amino-3-acetylaminobenzol | 2-(β-Aminoäthylamino)-4-chlor-6-(β-äthoxyäthoxy)-1,3,5-triazin | rotstichig gelb |

Tabelle 1 (Fortsetzung)

| Nr. | Chromophor | Triazin-Verbindung | Farbton auf Baumwolle |
|---|---|---|---|
| 36 | 2-Aminonaphthalin-3,6,8-trisulfonsäure → 3-Aminophenylharnstoff | 2-(β-Aminoäthylamino)-4-chlor-6-(β-äthoxyäthoxy)-1,3,5-triazin | rotstichig gelb |
| 37 | 1-Amino-3-acetylaminobenzol-6-sulfonsäure → 1-Aethyl-3-sulfomethyl-4-methyl-6-hydroxypyridon-(2)-5-carbonsäureamid, verseift | 2-(β-Aminoäthylamino)-4-chlor-6-(β-äthoxyäthoxy)-1,3,5-triazin | gelb |
| 38 | 1-Amino-3-acetylaminobenzol-6-sulfonsäure → 1-Aethyl-3-aminocarbonyl-4-methyl-6-hydroxypyridon-(2), verseift | 2-(β-Aminoäthylamino)-4-chlor-6-(β-äthoxyäthoxy)-1,3,5-triazin | gelb |
| 39 | 2-Aminonaphthalin-1,5-disulfonsäure → 2-Acetylamino-5-hydroxynaphthalin-7-sulfonsäure (verseift) | 2-(β-Aminoäthylamino)-4-chlor-6-(β-äthoxyäthoxy)-1,3,5-triazin | orange |
| 40 | 2-Aminonaphthalin-3,6,8-trisulfonsäure → 2-Acetylamino-5-hydroxynaphthalin-7-sulfonsäure (verseift) | 2-(β-Aminoäthylamino)-4-chlor-6-(β-äthoxyäthoxy)-1,3,5-triazin | orange |
| 41 | 1-Amino-4-methoxybenzol-2-sulfonsäure → 2-Amino-5-hydroxynaphthalin-7-sulfonsäure | 2-(β-Aminoäthylamino)-4-chlor-6-(β-äthoxyäthoxy)-1,3,5-triazin | scharlach |
| 42 | 1-Amino-4-methoxybenzol-2-sulfonsäure → 2-Methylamino-5-hydroxynaphthalin-7-sulfonsäure | 2-(β-Aminoäthylamino)-4-chlor-6-(β-äthoxyäthoxy)-1,3,5-triazin | scharlach |
| 43 | 1-Amino-3-acetylaminobenzol-6-sulfonsäure → 1-Benzoylamino-8-hydroxynaphthalin-3,6-disulfonsäure, verseift | 2-(β-Aminoäthylamino)-4-chlor-6-(β-äthoxyäthoxy)-1,3,5-triazin | blaustichig rot |

Tabelle 1 (Fortsetzung)

| Nr. | Chromophor | Triazin-Verbindung | Farbton auf Baumwolle |
|---|---|---|---|
| 44 | 1-Amino-4-acetylaminobenzol-2-sulfonsäure ⟶ saure 2-Amino-8-hydroxynaphthalin-6-sulfonsäure (verseift) | 2-(β-Aminoäthylamino)-4-chlor-6-(β-äthoxyäthoxy)-1,3,5-triazin | blaustichig rot |
| 45 | 2-Aminonaphthalin-1,5-disulfonsäure ⟶ 1-Amino-8-hydroxynaphthalin-3,6-disulfonsäure | 2-(β-Aminoäthylamino)-4-chlor-6-(β-äthoxyäthoxy)-1,3,5-triazin | blaustichig rot |
| 46 | 1-Amino-3-acetylaminobenzol-6-sulfonsäure ⟶ 1-Amino-8-hydroxy-2-(4'-sulfophenylazo)-naphthalin-3,6-disulfonsäure (verseift) | 2-(β-Aminoäthylamino)-4-chlor-6-(β-äthoxyäthoxy)-1,3,5-triazin | blau |
| 47 | 1-Amino-3-acetylaminobenzol-6-sulfonsäure ⟶ 1-Amino-8-hydroxy-2-(2',5'-disulfophenylazo)-naphthalin-3,6-disulfonsäure (verseift) | 2-(β-Aminoäthylamino)-4-chlor-6-(β-äthoxyäthoxy)-1,3,5-triazin | blau |
| 48 | N-(2-Carboxy-4-sulfophenyl)-N'-(2'-hydroxy-3'-amino-5'-sulfophenyl)-ms-phenylformazan (Cu-Komplex) | 2-(β-Aminoäthylamino)-4-chlor-6-(β-äthoxyäthoxy)-1,3,5-triazin | blau |
| 49 | N-(2-Carboxy-5-sulfophenyl)-N'-(2'-hydroxy-3'-amino-5'-sulfophenyl)-ms-phenylformazan (Cu-Komplex) | 2-(β-Aminoäthylamino)-4-chlor-6-(β-äthoxyäthoxy)-1,3,5-triazin | blau |

Tabelle 1 (Fortsetzung)

| Nr. | Chromophor | Triazin-Verbindung | Farbton auf Baumwolle |
| --- | --- | --- | --- |
| 50 | 1/2 Aequivalent 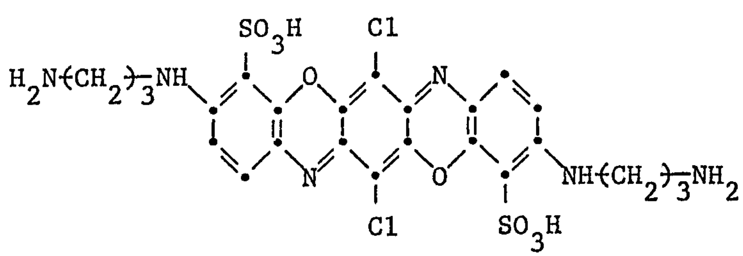 | 2-(β-Aminoäthylamino)-4-chlor-6-(β-äthoxyäthoxy)-1,3,5-triazin | blau |
| 51 | 1/2 Aequivalent 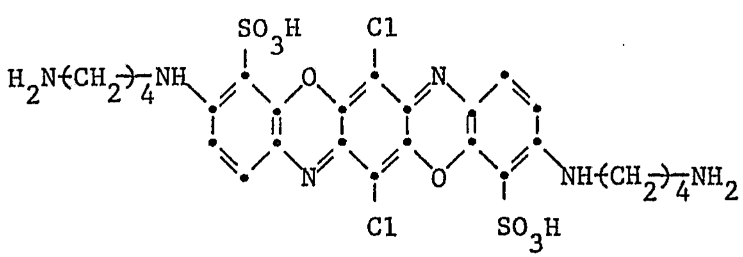 | 2-(β-Aminoäthylamino)-4-chlor-6-(β-äthoxyäthoxy)-1,3,5-triazin | blau |
| 52 | 2-Aminonaphthalin-3,6,8-trisulfonsäure → 1-Amino-3-acetylaminobenzol | 2-(3'-Amino-2'-methyl-5'-sulfophenylamino)-4-chlor-6-isopropoxy-1,3,5-triazin | rotstichig gelb |

Tabelle 1 (Fortsetzung)

| Nr. | Chromophor | Triazin-Verbindung | Farbton auf Baumwolle |
|---|---|---|---|
| 53 | 2-Aminonaphthalin-3,6,8-trisulfonsäure ⟶ 3-Aminophenylharnstoff | 2-(3'-Amino-2'-methyl-5'-sulfophenyl-amino)-4-chlor-6-isopropoxy-1,3,5-triazin | rotstichig gelb |
| 54 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | 2-(3'-Amino-2'-methyl-5'-sulfophenyl-amino)-4-chlor-6-isopropoxy-1,3,5-triazin | gelb |
| 55 | 1-Amino-3-acetylaminobenzol-5-sulfonsäure ⟶ 1-Aethyl-3-aminocarbonyl-4-methyl-6-hydroxy-pyridon-(2) (verseift) | 2-(3'-Amino-2'-methyl-5'-sulfophenyl-amino)-4-chlor-6-isopropoxy-1,3,5-triazin | gelb |
| 56 | 2-Aminonaphthalin-1,5-disulfonsäure ⟶ 2-Acetylamino-5-hydroxynaphthalin-7-sulfonsäure (verseift) | 2-(3'-Amino-2'-methyl-5'-sulfophenyl-amino)-4-chlor-6-isopropoxy-1,3,5-triazin | orange |
| 57 | 2-Aminonaphthalin-3,6,8-trisulfonsäure ⟶ 2-Acetylamino-5-hydroxynaphthalin-7-sulfonsäure (verseift) | 2-(3'-Amino-2'-methyl-5'-sulfophenyl-amino)-4-chlor-6-isopropoxy-1,3,5-triazin | orange |
| 58 | 1-Amino-4-methoxybenzol-2-sulfonsäure ⟶ 2-Amino-5-hydroxynaphthalin-7-sulfonsäure | 2-(3'-Amino-2'-methyl-5'-sulfophenyl-amino)-4-chlor-6-isopropoxy-1,3,5-triazin | scharlach |
| 59 | 1-Amino-4-methoxybenzol-2-sulfonsäure ⟶ 2-Methylamino-5-hydroxynaphthalin-7-sulfonsäure | 2-(3'-amino-2'-methyl-5'-sulfophenyl-amino)-4-chlor-6-isopropoxy-1,3,5-triazin | scharlach |

Tabelle 1 (Fortsetzung)

| Nr. | Chromophor | Triazin-Verbindung | Farbton auf Baumwolle |
|---|---|---|---|
| 60 | 1-Amino-3-acetylaminobenzol-6-sulfonsäure → 1-Benzoylamino-8-hydroxynaphthalin-3,6-disulfonsäure (verseift) | 2-(3'-Amino-2'-methyl-5'-sulfophenyl-amino)-4-chlor-6-isopropoxy-1,3,5-triazin | blaustichig rot |
| 61 | 1-Amino-4-acetylaminobenzol-2-sulfonsäure → saure 2-Amino-8-hydroxynaphthalin-6-sulfonsäure (verseift) | 2-(3'-Amino-2'-methyl-5'-sulfophenyl-amino)-4-chlor-6-isopropoxy-1,3,5-triazin | blaustichig rot |
| 62 | 2-Aminonaphthalin-1,5-disulfonsäure → 1-Amino-8-hydroxynaphthalin-3,6-disulfonsäure | 2-(3'-Amino-2'-methyl-5'-sulfophenyl-amino)-4-chlor-6-isopropoxy-1,3,5-triazin | blaustichig rot |
| 63 | 1-Amino-3-acetylaminobenzol-6-sulfonsäure → 1-Amino-8-hydroxy-2-(4'-sulfophenylazo)-naphthalin-3,6-disulfonsäure (verseift) | 2-(3'-Amino-2'-methyl-5'-sulfophenyl-amino)-4-chlor-6-isopropoxy-1,3,5-triazin | blau |
| 64 | 1-Amino-3-acetylaminobenzol-6-sulfonsäure → 1-Amino-8-hydroxy-2-(2',5'-disulfophenylazo)-naphthalin-3,6-disulfonsäure (verseift) | 2-(3'-Amino-2'-methyl-5'-sulfophenyl-amino)-4-chlor-6-isopropoxy-1,3,5-triazin | blau |
| 65 | N-(2-Carboxy-4-sulfophenyl)-N'-(2'-hydroxy-3'-amino-5'-sulfophenyl)-ms-phenylformazan (Cu-Komplex) | 2-(3'-Amino-2'-methyl-5'-sulfophenyl-amino)-4-chlor-6-isopropoxy-1,3,5-triazin | blau |
| 66 | N-(2-Carboxy-5-sulfophenyl)-N'-(2'-hydroxy-3'-amino-5'-sulfophenyl)-ms-phenylformazan (Cu-Komplex) | 2-(3'-Amino-2'-methyl-5'-sulfophenyl-amino)-4-chlor-6-isopropoxy-1,3,5-triazin | blau |

Tabelle 1 (Fortsetzung)

| Nr. | Chromophor | Triazin-Verbindung | Farbton auf Baumwolle |
|---|---|---|---|
| 67 | 1/2 Aequivalent 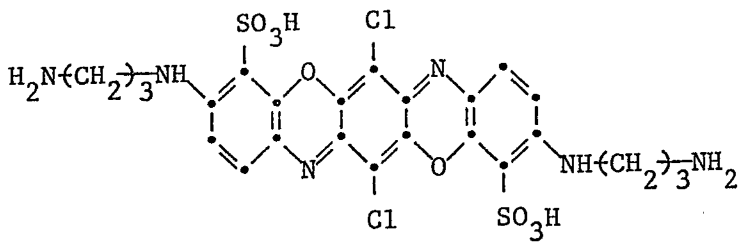 | 2-(3'-Amino-2'-methyl-5'-sulfophenyl-amino)-4-chlor-6-isopropoxy-1,3,5-triazin | blau |
| 68 | 1/2 Aequivalent 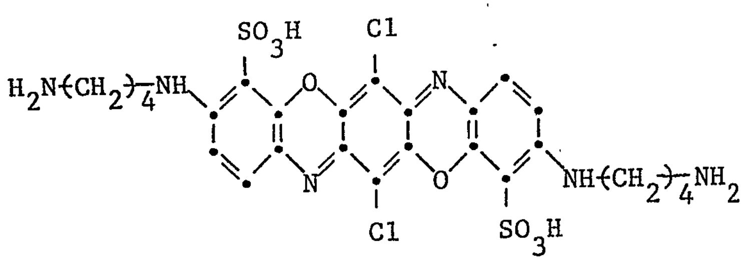 | 2-(3'-Amino-2'-methyl-5'-sulfophenyl-amino)-4-chlor-6-isopropoxy-1,3,5-triazin | blau |

Beispiel 4: 10,8 Teile 2-(3'-Amino-4'-sulfophenylamino)-4-chlor-6-isopropoxy-1,3,5-triazin werden in 300 ml Wasser neutral gelöst und die Lösung auf 0 bis 5° C abgekühlt. Bei dieser Temperatur werden 4,3 Teile 2,4,6-Trifluor-1,3,5-triazin innert 15 Minuten zugetropft, wobei der pH der Reaktionsmischung durch gleichzeitige Zugabe von 2n Natriumhydroxydlösung bei 7,0 gehalten wird. Nach Zusatz einer neutralen Lösung von 16,4 Teilen des Farbstoffes der Formel

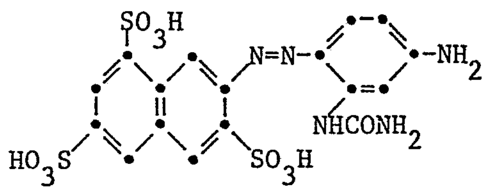

in 150 ml Wasser wird die Temperatur innert 2 bis 3 Stunden auf 20 bis 25° C erhöht und dabei der pH der Reaktionsmischung durch ständige Zugabe von 2n Natriumhydroxydlösung bei 7,5 bis 8,0 gehalten. Nach vollständiger Reaktion wird die Reaktionsmischung geklärt und der gebildete Reaktivfarbstoff der Formel

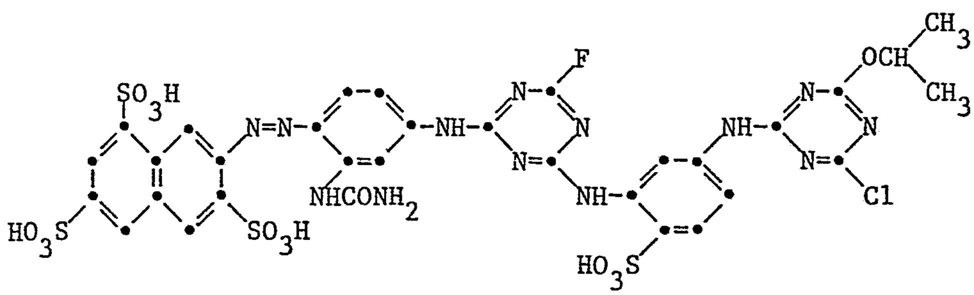

bei pH 6,5 durch Einstreuen von Kaliumchlorid ausgesalzen, filtriert, gewaschen und im Vakuum getrocknet. Er färbt Baumwolle in rotstichigen Gelbtönen und eignet sich besonders für Dreistufen-Färbeverfahren.

Weitere Reaktivfarbstoffe, die Baumwolle in den in Tabelle 2 Spalte 4 angegebenen Farbtönen färben, und die sich besonders für Dreistufen-Färbeverfahren eignen, werden erhalten, wenn man die in Spalte 2 angegebenen Triazin-Verbindungen gemäss den Angaben in Beispiel 4 zuerst mit 2,4,6-Trifluor-1,3,5-triazin und dann mit dem in Spalte 3 angegebenen, aminogruppenhaltigen Chromophor umsetzt.

Tabelle 2

| Nr. | Triazin-Verbindung | Chromophor | Farbton auf Baumwolle |
|---|---|---|---|
| 1 | 2-(3'-Amino-4'-sulfo phenylamino)-4-chlor-6-isopropoxy-1,3,5-triazin | 1-Amino-4-methoxybenzol-2-sulfonsäure → 2-Amino-5-hydroxy-naphthalin-7-sulfonsäure | scharlach |
| 2 | 2-(3'-Amino-4'-sulfo phenylamino)-4-chlor-6-isopropoxy-1,3,5-triazin | 1-Amino-3-acetylaminobenzol-6-sulfonsäure → 1-Benzoylamino-8-hydroxy-naphthalin-3,6-disulfonsäure, verseift | blaustichig rot |
| 3 | 2-(3'-Amino-4'-sulfo phenylamino)-4-chlor-6-isopropoxy-1,3,5-triazin | 1-Amino-3-acetylaminobenzol-6-sulfonsäure → 1-Amino-8-hydroxy-2-(4'-sulfophenylazo)-naphthalin-3,6-disulfonsäure, verseift | marineblau |
| 4 | 2-(4'-Amino-2',5'-disulfophenylamino)-4-chlor-6-isopropoxy-1,3,5-triazin | 1-Amino-4-methoxybenzol-2-sulfonsäure → 2-Amino-5-hydroxy-naphthalin-7-sulfonsäure | scharlach |
| 5 | 2-(4'-Amino-2',5'-disulfophenylamino)-4-chlor-6-isopropoxy-1,3,5-triazin | 1-Amino-3-acetylaminobenzol-6-sulfonsäure → 1-Aethyl-4-methyl-6-hydroxypyridon-(2)-3-carbonsäureamid, verseift | grünstichig gelb |

Tabelle 2 (Fortsetzung)

| Nr. | Triazin-Verbindung | Chromophor | Farbton auf Baumwolle |
|---|---|---|---|
| 6 | 2-(3'-Amino-4'-sulfophenylamino)-4-chlor-6-isopropoxy-1,3,5-triazin | 2-Aminonaphthalin-3,6,8-trisulfonsäure → 1-Amino-3-methylbenzol | rotstichig gelb |
| 7 | 2-(3'-Amino-4'-sulfophenylamino)-4-chlor-6-isopropoxy-1,3,5-triazin | 2-Aminonaphthalin-4,6,8-trisulfonsäure → 1-Amino-3-methylbenzol | rotstichig gelb |
| 8 | 2-(3'-Amino-4'-sulfophenylamino)-4-chlor-6-isopropoxy-1,3,5-triazin | 2-Aminonaphthalin-4,6,8-trisulfonsäure → 1-Amino-3-acetylaminobenzol | rotstichig gelb |
| 9 | 2-(3'-Amino-4'-sulfophenylamino)-4-chlor-6-isopropoxy-1,3,5-triazin | 1-Amino-4-(2',5'-disulfophenylazo)-naphthalin-6-sulfonsäure → 1-Amino-3-methylbenzol | braun |
| 10 | 2-(3'-Amino-4'-sulfophenylamino)-4-chlor-6-isopropoxy-1,3,5-triazin | 1-Amino-4-(2',5'-disulfophenylazo)-naphthalin-6-sulfonsäure → 1-Aminonaphthalin-6-sulfonsäure | braun |
| 11 | 2-(3'-Amino-4'-sulfophenylamino)-4-chlor-6-isopropoxy-1,3,5-triazin | 1-Amino-4-(4'-sulfophenylazo)-benzol-2-sulfonsäure → 1-Aminonaphthalin-6-sulfonsäure | braun |
| 12 | 2-(3'-Amino-4'-sulfophenylamino)-4-chlor-6-isopropoxy-1,3,5-triazin | 1-Amino-4-(4',6',8'-trisulfonaphthyl-2'-azo)-naphthalin-6-sulfonsäure → 1-Amino-3-methylbenzol | braun |
| 13 | 2-(3'-Amino-4'-sulfophenylamino)-4-chlor-6-isopropoxy-1,3,5-triazin | 1-Amino-4-(2',5'-disulfophenylazo)-naphthalin-6-sulfonsäure → 1-Amino-2,5-dimethylbenzol | braun |

Tabelle 2 (Fortsetzung)

| Nr. | Triazin-Verbindung | Chromophor | Farbton auf Baumwolle |
|---|---|---|---|
| 14 | 2-(3'-Amino-4'-sulfophenylamino)-4-chlor-6-isopropoxy-1,3,5-triazin | 1-Amino-3-acetylaminobenzol-6-sulfonsäure → 1-Aethyl-3-sulfomethyl-4-methyl-6-hydroxy-pyridon-(2)-5-carbonsäureamid (verseift) | gelb |
| 15 | 2-(3'-Amino-4'-sulfophenylamino)-4-chlor-6-isopropoxy-1,3,5-triazin | 1-Amino-3-acetylaminobenzol-6-sulfonsäure → 1-Aethyl-3-aminocarbonyl-4-methyl-6-hydroxy-pyridon-(2) (verseift) | gelb |
| 16 | 2-(3'-Amino-4'-sulfophenylamino)-4-chlor-6-isopropoxy-1,3,5-triazin | 1-Amino-3-acetylaminobenzol-6-sulfonsäure → 1-(2'-Methyl-4'-sulfophenyl)-3-carboxy-pyrazolon-(5) (verseift) | gelb |
| 17 | 2-(3'-Amino-4'-sulfophenylamino)-4-chlor-6-isopropoxy-1,3,5-triazin | 1-Amino-3-acetylaminobenzol-6-sulfonsäure → 1-(4',8'-Disulfonaphthyl-[2'])-3-methyl-pyrazolon-(5) (verseift) | gelb |
| 18 | 2-(3'-Amino-4'-sulfophenylamino)-4-chlor-6-isopropoxy-1,3,5-triazin | 2-Aminonaphthalin-1,5-disulfonsäure → 2-Acetylamino-5-hydroxynaphthalin-7-sulfonsäure (verseift) | orange |
| 19 | 2-(3'-Amino-4'-sulfophenylamino)-4-chlor-6-isopropoxy-1,3,5-triazin | 2-Aminonaphthalin-3,6,8-trisulfonsäure → 2-Acetylamino-5-hydroxynaphthalin-7-sulfonsäure (verseift) | orange |
| 20 | 2-(3'-Amino-4'-sulfophenylamino)-4-chlor-6-isopropoxy-1,3,5-triazin | 2-Aminonaphthalin-1,5,7-trisulfonsäure → 1-Acetylamino-5-hydroxynaphthalin-7-sulfonsäure (verseift) | orange |

Tabelle 2 (Fortsetzung)

| Nr. | Triazin-Verbindung | Chromophor | Farbton auf Baumwolle |
|---|---|---|---|
| 21 | 2-(3'-Amino-4'-sulfophenylamino)-4-chlor-6-isopropoxy-1,3,5-triazin | 1-Amino-4-methoxybenzol-2,5-disulfonsäure → 2-Amino-5-hydroxynaphthalin-7-sulfonsäure | scharlach |
| 22 | 2-(3'-Amino-4'-sulfophenylamino)-4-chlor-6-isopropoxy-1,3,5-triazin | 1-Amino-4-methoxybenzol-2-sulfonsäure → 2-Methylamino-5-hydroxynaphthalin-7-sulfonsäure | scharlach |
| 23 | 2-(3'-Amino-4'-sulfophenylamino)-4-chlor-6-isopropoxy-1,3,5-triazin | 1-Aminobenzol-2-sulfonsäure → 1-(4'-Nitrobenzoylamino)-8-hydroxynaphthalin-3,6-disulfonsäure (reduziert) | rot |
| 24 | 2-(3'-Amino-4'-sulfophenylamino)-4-chlor-6-isopropoxy-1,3,5-triazin | 1-Amino-3-acetylaminobenzol-6-sulfonsäure → 1-Acetylamino-8-hydroxynaphthalin-3,6-disulfonsäure (verseift) | blaustichig rot |
| 25 | 2-(3'-Amino-4'-sulfophenylamino)-4-chlor-6-isopropoxy-1,3,5-triazin | 1-Amino-3-acetylaminobenzol-6-sulfonsäure → 1-Benzoylamino-8-hydroxynaphthalin-4,6-disulfonsäure (verseift) | blaustichig rot |
| 26 | 2-(3'-Amino-4'-sulfophenylamino)-4-chlor-6-isopropoxy-1,3,5-triazin | 1-Amino-3-acetylaminobenzol-6-sulfonsäure → 1-Acetylamino-8-hydroxynaphthalin-4,6-disulfonsäure (verseift) | blaustichig rot |
| 27 | 2-(3'-Amino-4'-sulfophenylamino)-4-chlor-6-isopropoxy-1,3,5-triazin | 1-Amino-4-acetylaminobenzol-2-sulfonsäure → saure 2-Amino-8-hydroxynaphthalin-3,6-disulfonsäure (verseift) | blaustichig rot |

Tabelle 2 (Fortsetzung)

| Nr. | Triazin-Verbindung | Chromophor | Farbton auf Baumwolle |
|---|---|---|---|
| 28 | 2-(3'-Amino-4'-sulfophenylamino)-4-chlor-6-isopropoxy-1,3,5-triazin | 1-Amino-4-acetylaminobenzol-2-sulfonsäure ⟶ saure 2-Amino-8-hydroxynaphthalin-6-sulfonsäure (verseift) | blaustichig rot |
| 29 | 2-(3'-Amino-4'-sulfophenylamino)-4-chlor-6-isopropoxy-1,3,5-triazin | 2-Aminonaphthalin-1,5-disulfonsäure ⟶ 1-Amino-8-hydroxynaphthalin-3,6-disulfonsäure | blaustichig rot |
| 30 | 2-(3'-Amino-4'-sulfophenylamino)-4-chlor-6-isopropoxy-1,3,5-triazin | 3-Methoxy-4-amino-6-methylazobenzol-2',5'-disulfonsäure ⟶ 2-Methylamino-5-hydroxynaphthalin-7-sulfonsäure (entmethylierend gekupfert) | marineblau |
| 31 | 2-(3'-Amino-4'-sulfophenylamino)-4-chlor-6-isopropoxy-1,3,5-triazin | 3-Methoxy-4-amino-6-methylazobenzol-2',4'-disulfonsäure ⟶ 2-Amino-5-hydroxynaphthalin-1,7-disulfonsäure (entmethylierend gekupfert) | marineblau |
| 32 | 2-(3'-Amino-4'-sulfophenylamino)-4-chlor-6-isopropoxy-1,3,5-triazin | 1-Amino-3-acetylaminobenzol-6-sulfonsäure ⟶ 1-Amino-8-hydroxy-2-(2',5'-disulfophenylazo)-naphthalin-3,6-disulfonsäure (verseift) | blau |
| 33 | 2-(3'-Amino-4'-sulfophenylamino)-4-chlor-6-isopropoxy-1,3,5-triazin | N-(2-Carboxy-4-sulfophenyl)-N'-(2'-hydroxy-3'-amino-5'-sulfophenyl)-ms-phenylformazan (Cu-Komplex) | blau |
| 34 | 2-(3'-Amino-4'-sulfophenylamino)-4-chlor-6-isopropoxy-1,3,5-triazin | N-(2-Carboxy-5-sulfophenyl)-N'-(2'-hydroxy-3'-amino-5'-sulfophenyl)-ms-phenylformazan (Cu-Komplex) | blau |

Tabelle 2 (Fortsetzung)

| Nr. | Triazin-Verbindung | Chromophor | Farbton auf Baumwolle |
|---|---|---|---|
| 35 | 2-(3'-Amino-4'-sulfophenylamino)-4-chlor-6-isopropoxy-1,3,5-triazin | 1/2 Aequivalent 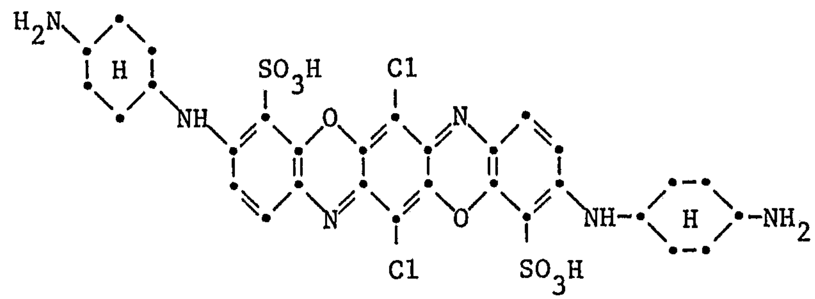 | blau |
| 36 | 2-(3'-Amino-4'-sulfophenylamino)-4-chlor-6-isopropoxy-1,3,5-triazin | 1/2 Aequivalent 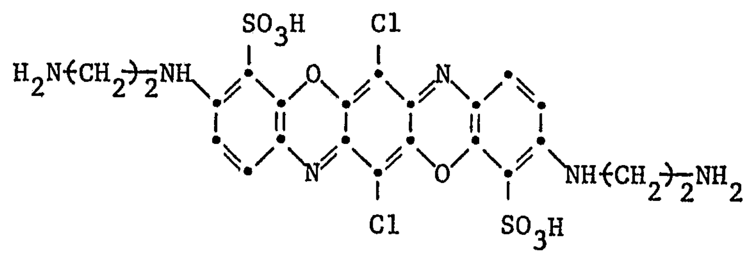 | blau |

Tabelle 2 (Fortsetzung)

| Nr. | Triazin-Verbindung | Chromophor | Farbton auf Baumwolle |
|---|---|---|---|
| 37 | 2-(3'-Amino-4'-sulfophenylamino)-4-chlor-6-isopropoxy-1,3,5-triazin | 1/2 Aequivalent 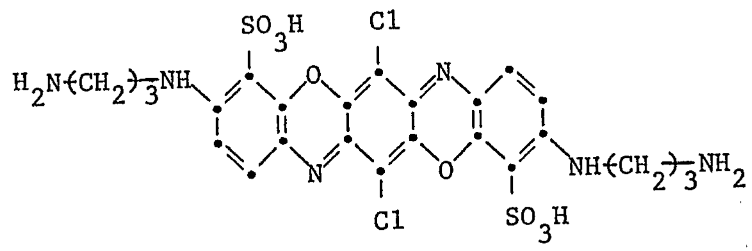 | blau |
| 38 | 2-(3'-Amino-4'-sulfophenylamino)-4-chlor-6-isopropoxy-1,3,5-triazin | 1/2 Aequivalent 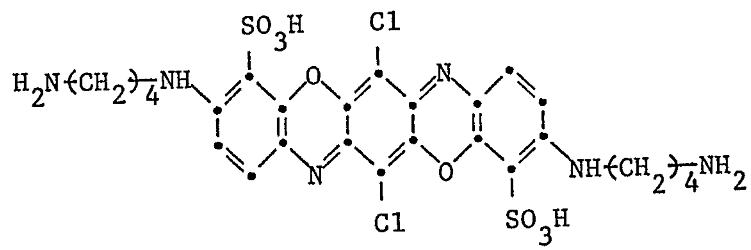 | blau |

Tabelle 2 (Fortsetzung)

| Nr. | Triazin-Verbindung | Chromophor | Farbton auf Baumwolle |
|---|---|---|---|
| 39 | 2-(4'-Amino-3'-sulfophenylamino)-4-chlor-6-isopropoxy-1,3,5-triazin | 2-Aminonaphthalin-3,6,8-trisulfonsäure → 3-Aminophenylharnstoff | rotstichig gelb |
| 40 | 2-(4'-Amino-3'-sulfophenylamino)-4-chlor—6-isopropoxy-1,3,5-triazin | 2-Aminonaphthalin-3,6-8-trisulfonsäure → 1-Amino-3-methylbenzol | rotstichig gelb |
| 41 | 2-(4'-Amino-3'-sulfophenylamino)-4-chlor—6-isopropoxy-1,3,5-triazin | 2-Aminonaphthalin-4,6,8-trisulfonsäure → 1-Amino-3-methylbenzol | rotstichig gelb |
| 42 | 2-(4'-Amino-3'-sulfophenylamino)-4-chlor—6-isopropoxy-1,3,5-triazin | 2-Aminonaphthalin-4,6,8-trisulfonsäure → 1-Amino-3-acetylaminobenzol | rotstichig gelb |
| 43 | 2-(4'-Amino-3'-sulfophenylamino)-4-chlor—6-isopropoxy-1,3,5-triazin | 1-Amino-4-(2',5'-disulfophenylazo)-naphthalin-6-sulfonsäure → 1-Amino-3-methylbenzol | braun |
| 44 | 2-(4'-Amino-3'-sulfophenylamino)-4-chlor—6-isopropoxy-1,3,5-triazin | 1-Amino-4-(2',5'-disulfophenylazo)-naphthalin-6-sulfonsäure → 1-Aminonaphthalin-6-sulfonsäure | braun |
| 45 | 2-(4'-Amino-3'-sulfophenylamino)-4-chlor—6-isopropoxy-1,3,5-triazin | 1-Amino-4-(4'-sulfophenylazo)-benzol-2-sulfonsäure → 1-Aminonaphthalin-6-sulfonsäure | braun |
| 46 | 2-(4'-Amino-3'-sulfophenylamino)-4-chlor—6-isopropoxy-1,3,5-triazin | 1-Amino-4-(4',6',8'-trisulfonaphthyl-2'-azo)-naphthalin-6-sulfonsäure → 1-Amino-3-methylbenzol | braun |

Tabelle 2 (Fortsetzung)

| Nr. | Triazin-Verbindung | Chromophor | Farbton auf Baumwolle |
|---|---|---|---|
| 47 | 2-(4'-Amino-3'-sulfophenylamino)-4-chlor-6-isopropoxy-1,3,5-triazin | 1-Amino-4-(2',5'-disulfophenylazo)-naphthalin-6-sulfonsäure → 1-Amino-2,5-dimethylbenzol | braun |
| 48 | 2-(4'-Amino-3'-sulfophenylamino)-4-chlor-6-isopropoxy-1,3,5-triazin | 1-Amino-3-acetylaminobenzol-6-sulfonsäure → 1-Aethyl-3-sulfomethyl-4-methyl-6-hydroxy-pyridon-(2)-5-carbonsäureamid (verseift) | gelb |
| 49 | 2-(4'-Amino-3'-sulfophenylamino)-4-chlor-6-isopropoxy-1,3,5-triazin | 1-Amino-3-acetylaminobenzol-6-sulfonsäure → 1-Aethyl-3-aminocarbonyl-4-methyl-6-hydroxy-pyridion-(2) (verseift) | gelb |
| 50 | 2-(4'-Amino-3'-sulfophenylamino)-4-chlor-6-isopropoxy-1,3,5-triazin | 1-Amino-3-acetylaminobenzol-6-sulfonsäure → 1-(2'-Methyl-4'-sulfophenyl)-3-carboxy-pyrazolon-(5) (verseift) | gelb |
| 51 | 2-(4'-Amino-3'-sulfophenylamino)-4-chlor-6-isopropoxy-1,3,5-triazin | 1-Amino-3-acetylaminobenzol-6-sulfonsäure → 1-(4',8'-Disulfonaphthyl-[2'])-3-methyl-pyrazolon-(5) (verseift) | gelb |
| 52 | 2-(4'-Amino-3'-sulfophenylamino)-4-chlor-6-isopropoxy-1,3,5-triazin | 2-Aminonaphthalin-1,5-disulfonsäure → 2-Acetylamino-5-hydroxynaphthalin-7-sulfonsäure (verseift) | orange |
| 53 | 2-(4'-Amino-3'-sulfophenylamino)-4-chlor-6-isopropoxy-1,3,5-triazin | 2-Aminonaphthalin-3,6,8-trisulfonsäure → 2-Acetylamino-5-hydroxynaphthalin-7-sulfonsäure (verseift) | orange |

Tabelle 2 (Fortsetzung)

| Nr. | Triazin-Verbindung | Chromophor | Farbton auf Baumwolle |
|---|---|---|---|
| 54 | 2-(4'-Amino-3'-sulfophenylamino)-4-chlor-6-isopropoxy-1,3,5-triazin | 2-Aminonaphthalin-1,5,7-trisulfonsäure → 1-Acetylamino-5-hydroxynaphthalin-7-sulfonsäure (verseift) | orange |
| 55 | 2-(4'-Amino-3'-sulfophenylamino)-4-chlor-6-isopropoxy-1,3,5-triazin | 1-Amino-4-methoxybenzol-2,5-disulfonsäure → 2-Amino-5-hydroxynaphthalin-7-sulfonsäure | scharlach |
| 56 | 2-(4'-Amino-3'-sulfophenylamino)-4-chlor-6-isopropoxy-1,3,5-triazin | 1-Amino-4-methoxybenzol-2-sulfonsäure → 2-Amino-5-hydroxynaphthalin-7-sulfonsäure | scharlach |
| 57 | 2-(4'-Amino-3'-sulfophenylamino)-4-chlor-6-isopropoxy-1,3,5-triazin | 1-Amino-4-methoxybenzol-2-sulfonsäure → 2-Methylamino-5-hydroxynaphthalin-7-sulfonsäure | scharlach |
| 58 | 2-(4'-Amino-3'-sulfophenylamino)-4-chlor-6-isopropoxy-1,3,5-triazin | 1-Aminobenzol-2-sulfonsäure → 1-(4'-Nitrobenzoylamino)-8-hydroxynaphthalin-3,6-disulfonsäure (reduziert) | rot |
| 59 | 2-(4'-Amino-3'-sulfophenylamino)-4-chlor-6-isopropoxy-1,3,5-triazin | 1-Amino-3-acetylaminobenzol-6-sulfonsäure → 1-Benzoylamino-8-hydroxynaphthalin-3,6-disulfonsäure (verseift) | blaustichig rot |
| 60 | 2-(4'-Amino-3'-sulfophenylamino)-4-chlor-6-isopropoxy-1,3,5-triazin | 1-Amino-3-acetylaminobenzol-6-sulfonsäure → 1-Acetylamino-8-hydroxynaphthalin-3,6-disulfonsäure (verseift) | blaustichig rot |

Tabelle 2 (Fortsetzung)

| Nr. | Triazin-Verbindung | Chromophor | Farbton auf Baumwolle |
|---|---|---|---|
| 61 | 2-(4'-Amino-3'-sulfophenylamino)-4-chlor-6-isopropoxy-1,3,5-triazin | 1-Amino-3-acetylaminobenzol-6-sulfonsäure → 1-Benzoylamino-8-hydroxynaphthalin-4,6-disulfonsäure (verseift) | blaustichig rot |
| 62 | 2-(4'-Amino-3'-sulfophenylamino)-4-chlor-6-isopropoxy-1,3,5-triazin | 1-Amino-3-acetylaminobenzol-6-sulfonsäure → 1-Acetylamino-8-hydroxynaphthalin-4,6-disulfonsäure (verseift) | blaustichig rot |
| 63 | 2-(4'-Amino-3'-sulfophenylamino)-4-chlor-6-isopropoxy-1,3,5-triazin | 1-Amino-4-acetylaminobenzol-2-sulfonsäure → saure 2-Amino-8-hydroxynaphthalin-3,6-disulfonsäure (verseift) | blaustichig rot |
| 64 | 2-(4'-Amino-3'-sulfophenylamino)-4-chlor-6-isopropoxy-1,3,5-triazin | 1-Amino-4-acetylaminobenzol-2-sulfonsäure → saure 2-Amino-8-hydroxynaphthalin-6-sulfonsäure (verseift) | blaustichig rot |
| 65 | 2-(4'-Amino-3'-sulfophenylamino)-4-chlor-6-isopropoxy-1,3,5-triazin | 2-Aminonaphthalin-1,5-disulfonsäure → 1-Amino-8-hydroxynaphthalin-3,6-disulfonsäure | blaustichig rot |
| 66 | 2-(4'-Amino-3'-sulfophenylamino)-4-chlor-6-isopropoxy-1,3,5-triazin | 3-Methoxy-4-amino-6-methylazobenzol-2',5'-disulfonsäure → 2-Methylamino-5-hydroxynaphthalin-7-sulfonsäure (entmethylierend gekupfert) | marineblau |

Tabelle 2 (Fortsetzung)

| Nr. | Triazin-Verbindung | Chromophor | Farbton auf Baumwolle |
|---|---|---|---|
| 67 | 2-(4'-Amino-3'-sulfophenylamino)-4-chlor-6-isopropoxy-1,3,5-triazin | 3-Methoxy-4-amino-6-methylazobenzol-2',4'-disulfonsäure → 2-Amino-5-hydroxy-naphthalin-1,7-disulfonsäure (entmethylierend gekupfert) | marineblau |
| 68 | 2-(4'-Amino-3'-sulfophenylamino)-4-chlor-6-isopropoxy-1,3,5-triazin | 1-Amino-3-acetylaminobenzol-6-sulfonsäure → 1-Amino-8-hydroxy-2-(4'-sulfophenylazo)-naphthalin-3,6-disulfonsäure (verseift) | blau |
| 69 | 2-(4'-Amino-3'-sulfophenylamino)-4-chlor-6-isopropoxy-1,3,5-triazin | 1-Amino-3-acetylaminobenzol-6-sulfonsäure → 1-Amino-8-hydroxy-2-(2',5'-disulfophenylazo)-naphthalin-3,6-disulfonsäure (verseift) | blau |
| 70 | 2-(4'-Amino-3'-sulfophenylamino)-4-chlor-6-isopropoxy-1,3,5-triazin | N-(2-Carboxy-4-sulfophenyl)-N'-(2'-hydroxy-3'-amino-5'-sulfophenyl)-ms-phenylformazan (Cu-Komplex) | blau |
| 71 | 2-(4'-Amino-3'-sulfophenylamino)-4-chlor-6-isopropoxy-1,3,5-triazin | N-(2-Carboxy-5-sulfophenyl)-N'-(2'-hydroxy-3'-amino-5'-sulfophenyl)-ms-phenylformazan (Cu-Komplex) | blau |

Tabelle 2 (Fortsetzung)

| Nr. | Triazin-Verbindung | Chromophor | Farbton auf Baumwolle |
|---|---|---|---|
| 72 | 2-(4'-Amino-3'-sulfophenylamino)-4-chlor-6-isopropoxy-1,3,5-triazin | 1/2 Aequivalent 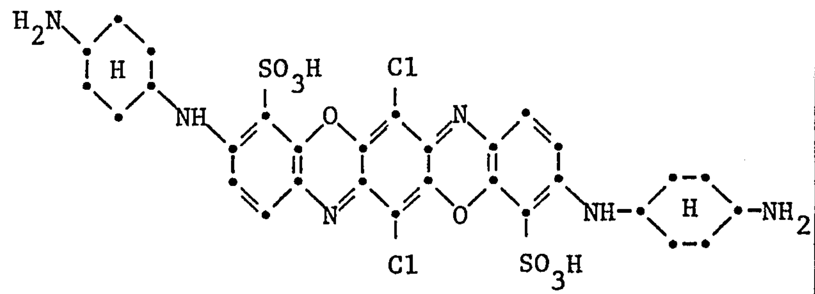 | blau |
| 73 | 2-(4'-Amino-3'-sulfophenylamino)-4-chlor-6-isopropoxy-1,3,5-triazin | 1/2 Aequivalent 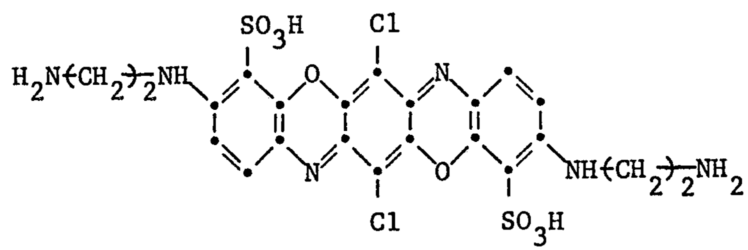 | blau |

Tabelle 2 (Fortsetzung)

| Nr. | Triazin-Verbindung | Chromophor | Farbton auf Baumwolle |
|---|---|---|---|
| 74 | 2-(4'-Amino-3'-sulfophenylamino)-4-chlor-6-isopropoxy-1,3,5-triazin | 1/2 Aequivalent 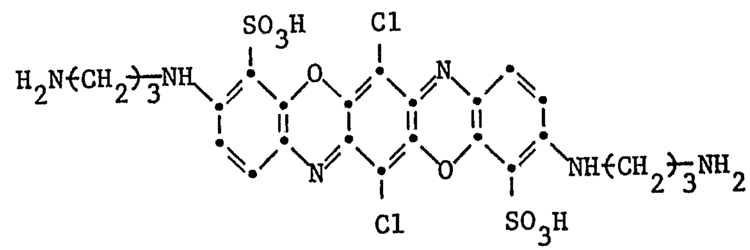 | blau |
| 75 | 2-(4'-Amino-3'-sulfophenylamino)-4-chlor-6-isopropoxy-1,3,5-triazin | 1/2 Aequivalent 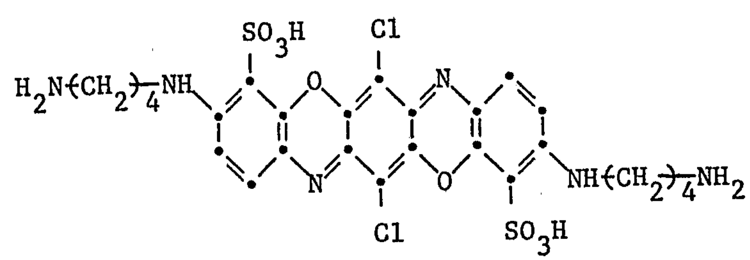 | blau |

Tabelle 2 (Fortsetzung)

| Nr. | Triazin-Verbindung | Chromophor | Farbton auf Baumwolle |
|---|---|---|---|
| 76 | 2-(4'-Amino-2',5'-disulfophenylamino)-4-chlor-6-isopropoxy-1,3,5-triazin | 2-Aminonaphthalin-3,6,8-trisulfonsäure → 3-Aminophenylharnstoff | rotstichig gelb |
| 77 | 2-(4'-Amino-2',5'-disulfophenylamino)-4-chlor-6-isopropoxy-1,3,5-triazin | 2-Aminonaphthalin-3,6,8-trisulfonsäure → 1-Amino-3-methylbenzol | rotstichig gelb |
| 78 | 2-(4'-Amino-2',5'-disulfophenylamino)-4-chlor-6-isopropoxy-1,3,5-triazin | 2-Aminonaphthalin-4,6,8-trisulfonsäure → 1-Amino-3-methylbenzol | rotstichig gelb |
| 79 | 2-(4'-Amino-2',5'-disulfophenylamino)-4-chlor-6-isopropoxy-1,3,5-triazin | 2-Aminonaphthalin-4,6,8-trisulfonsäure → 1-Amino-3-acetylaminobenzol | rotstichig gelb |
| 80 | 2-(4'-Amino-2',5'-disulfophenylamino)-4-chlor-6-isopropoxy-1,3,5-triazin | 1-Amino-4-(2',5'-disulfophenylazo)-naphthalin-6-sulfonsäure → 1-Amino-3-methylbenzol | braun |
| 81 | 2-(4'-Amino-2',5'-disulfophenylamino)-4-chlor-6-isopropoxy-1,3,5-triazin | 1-Amino-4-(2',5'-disulfophenylazo)-naphthalin-6-sulfonsäure → 1-Aminonaphthalin-6-sulfonsäure | braun |
| 82 | 2-(4'-Amino-2',5'-disulfophenylamino)-4-chlor-6-isopropoxy-1,3,5-triazin | 1-Amino-4-(4'-sulfophenylazo)-benzol-2-sulfonsäure → 1-Aminonaphthalin-6-sulfonsäure | braun |
| 83 | 2-(4'-Amino-2',5'-disulfophenylamino)-4-chlor-6-isopropoxy-1,3,5-triazin | 1-Amino-4-(4',6',8'-trisulfonaphthyl-2'-azo)-naphthalin-6-sulfonsäure → 1-Amino-3-methylbenzol | braun |
| 84 | 2-(4'-Amino-2',5'-disulfophenylamino)-4-chlor-6-isopropoxy-1,3,5-triazin | 1-Amino-4-(2',5'-disulfophenylazo)-naphthalin-6-sulfonsäure → 1-Amino-2,5-dimethylbenzol | braun |

Tabelle 2 (Fortsetzung)

| Nr. | Triazin-Verbindung | Chromophor | Farbton auf Baumwolle |
|---|---|---|---|
| 85 | 2-(4'-Amino-2',5'-disulfophenylamino)-4-chlor-6-isopropoxy-1,3,5-triazin | 1-Amino-3-acetylaminobenzol-6-sulfonsäure → 1-Aethyl-3-sulfomethyl-4-methyl-6-hydroxy-pyridon-(2)-5-carbonsäureamid (verseift) | gelb |
| 86 | 2-(4'-Amino-2',5'-disulfophenylamino)-4-chlor-6-isopropoxy-1,3,5-triazin | 1-Amino-3-acetylaminobenzol-6-sulfonsäure → 1-(2'-Methyl-4'-sulfophenyl)-3-carboxy-pyrazolon-(5) (verseift) | gelb |
| 87 | 2-(4'-Amino-2',5'-disulfophenylamino)-4-chlor-6-isopropoxy-1,3,5-triazin | 1-Amino-3-acetylaminobenzol-6-sulfonsäure → 1-(4',8'-Disulfonaphthyl-[2'])-3-methyl-pyrazolon-(5) (verseift) | gelb |
| 88 | 2-(4'-Amino-2',5'-disulfophenylamino)-4-chlor-6-isopropoxy-1,3,5-triazin | 2-Aminonaphthalin-1,5-disulfonsäure → 2-Acetylamino-5-hydroxynaphthalin-7-sulfonsäure (verseift) | orange |
| 89 | 2-(4'-Amino-2',5'-disulfophenylamino)-4-chlor-6-isopropoxy-1,3,5-triazin | 2-Aminonaphthalin-3,6,8-trisulfonsäure → 2-Acetylamino-5-hydroxynaphthalin-7-sulfonsäure (verseift) | orange |
| 90 | 2-(4'-Amino-2',5'-disulfophenylamino)-4-chlor-6-isopropoxy-1,3,5-triazin | 2-Aminonaphthalin-1,5,7-trisulfonsäure → 1-Acetylamino-5-hydroxynaphthalin-7-sulfonsäure (verseift) | orange |
| 91 | 2-(4'-Amino-2',5'-disulfophenylamino)-4-chlor-6-isopropoxy-1,3,5-triazin | 1-Amino-4-methoxybenzol-2,5-disulfonsäure → 2-Amino-5-hydroxynaphthalin-7-sulfonsäure | scharlach |

Tabelle 2 (Fortsetzung)

| Nr. | Triazin-Verbindung | Chromophor | Farbton auf Baumwolle |
|---|---|---|---|
| 92 | 2-(4'-Amino-2',5'-disulfophenylamino)-4-chlor-6-isopropoxy-1,3,5-triazin | 1-Amino-4-methoxybenzol-2-sulfonsäure → 2-Methylamino-5-hydroxynaphthalin-7-sulfonsäure | scharlach |
| 93 | 2-(4'-Amino-2',5'-disulfophenylamino)-4-chlor-6-isopropoxy-1,3,5-triazin | 1-Aminobenzol-2-sulfonsäure → 1-(4'-Nitrobenzoylamino)-8-hydroxynaphthalin-3,6-disulfonsäure (reduziert) | rot |
| 94 | 2-(4'-Amino-2',5'-disulfophenylamino)-4-chlor-6-isopropoxy-1,3,5-triazin | 1-Amino-3-acetylaminobenzol-6-sulfonsäure → 1-Benzoylamino-8-hydroxynaphthalin-3,6-disulfonsäure (verseift) | blaustichig rot |
| 95 | 2-(4'-Amino-2',5'-disulfophenylamino)-4-chlor-6-isopropoxy-1,3,5-triazin | 1-Amino-3-acetylaminobenzol-6-sulfonsäure → 1-Acetylamino-8-hydroxynaphthalin-3,6-disulfonsäure (verseift) | blaustichig rot |
| 96 | 2-(4'-Amino-2',5'-disulfophenylamino)-4-chlor-6-isopropoxy-1,3,5-triazin | 1-Amino-3-acetylaminobenzol-6-sulfonsäure → 1-Benzoylamino-8-hydroxynaphthalin-4,6-disulfonsäure (verseift) | blaustichig rot |
| 97 | 2-(4'-Amino-2',5'-disulfophenylamino)-4-chlor-6-isopropoxy-1,3,5-triazin | 1-Amino-3-acetylaminobenzol-6-sulfonsäure → 1-Acetylamino-8-hydroxynaphthalin-4,6-disulfonsäure (verseift) | blaustichig rot |
| 98 | 2-(4'-Amino-2',5'-disulfophenylamino)-4-chlor-6-isopropoxy-1,3,5-triazin | 1-Amino-4-acetylaminobenzol-2-sulfonsäure → saure 2-Amino-8-hydroxynaphthalin-3,6-disulfonsäure (verseift) | blaustichig rot |

Tabelle 2 (Fortsetzung)

| Nr. | Triazin-Verbindung | Chromophor | Farbton auf Baumwolle |
|---|---|---|---|
| 99 | 2-(4'-Amino-2',5'-disulfophenylamino)-4-chlor-6-isopropoxy-1,3,5-triazin | 1-Amino-4-acetylaminobenzol-2-sulfonsäure → saure 2-Amino-8-hydroxynaphthalin-6-sulfonsäure (verseift) | blaustichig rot |
| 100 | 2-(4'-Amino-2',5'-disulfophenylamino)-4-chlor-6-isopropoxy-1,3,5-triazin | 2-Aminonaphthalin-1,5-disulfonsäure → 1-Amino-8-hydroxynaphthalin-3,6-disulfonsäure | blaustichig rot |
| 101 | 2-(4'-Amino-2',5'-disulfophenylamino)-4-chlor-6-isopropoxy-1,3,5-triazin | 3-Methoxy-4-amino-6-methylazobenzol-2',5'-disulfonsäure → 2-Methylamino-5-hydroxynaphthalin-7-sulfonsäure (entmethylierend gekupfert) | marineblau |
| 102 | 2-(4'-Amino-2',5'-disulfophenylamino)-4-chlor-6-isopropoxy-1,3,5-triazin | 3-Methoxy-4-amino-6-methylazobenzol-2',4'-disulfonsäure → 2-Amino-5-hydroxynaphthalin-1,7-disulfonsäure (entmethylierend gekupfert) | marineblau |
| 103 | 2-(4'-Amino-2',5'-disulfophenylamino)-4-chlor-6-isopropoxy-1,3,5-triazin | 1-Amino-3-acetylaminobenzol-6-sulfonsäure → 1-Amino-8-hydroxy-2-(4'-sulfophenylazo)-naphthalin-3,6-disulfonsäure (verseift) | blau |
| 104 | 2-(4'-Amino-2',5'-disulfophenylamino)-4-chlor-6-isopropoxy-1,3,5-triazin | 1-Amino-3-acetylaminobenzol-6-sulfonsäure → 1-Amino-8-hydroxy-2-(2',5'-disulfophenylazo)-naphthalin-3,6-disulfonsäure (verseift) | blau |

Tabelle 2 (Fortsetzung)

| Nr. | Triazin-Verbindung | Chromophor | Farbton auf Baumwolle |
|---|---|---|---|
| 105 | 2-(4'-Amino-2',5'-disulfophenylamino)-4-chlor-6-isopropoxy-1,3,5-triazin | N-(2-Carboxy-4-sulfophenyl)-N'-(2'-hydroxy-3'-amino-5'-sulfophenyl)-ms-phenylformazan (Cu-Komplex) | blau |
| 106 | 2-(4'-Amino-2',5'-disulfophenylamino)-4-chlor-6-isopropoxy-1,3,5-triazin | N-(2-Carboxy-5-sulfophenyl)-N'-(2'-hydroxy-3'-amino-5'-sulfophenyl)-ms-phenylformazan (Cu-Komplex) | blau |
| 107 | 2-(4'-Amino-2',5'-disulfophenylamino)-4-chlor-6-isopropoxy-1,3,5-triazin | 1/2 Aequivalent 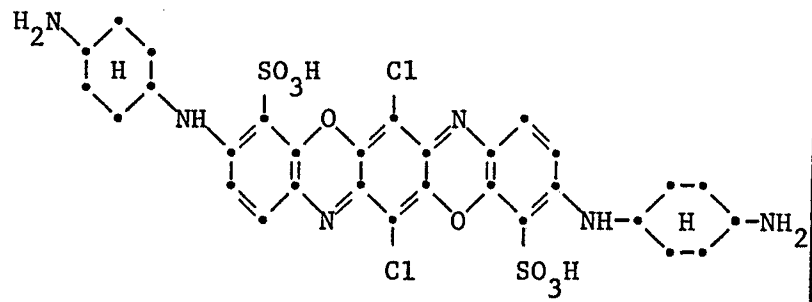 | blau |

Tabelle 2 (Fortsetzung)

| Nr. | Triazin-Verbindung | Chromophor | Farbton auf Baumwolle |
|---|---|---|---|
| 108 | 2-(4'-Amino-2',5'-disulfophenylamino)-4-chlor-6-isopropoxy-1,3,5-triazin | 1/2 Aequivalent 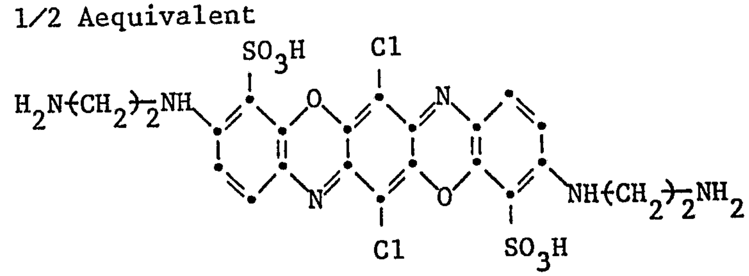 | blau |
| 109 | 2-(4'-Amino-2',5'-disulfophenylamino)-4-chlor-6-isopropoxy-1,3,5-triazin | 1/2 Aequivalent 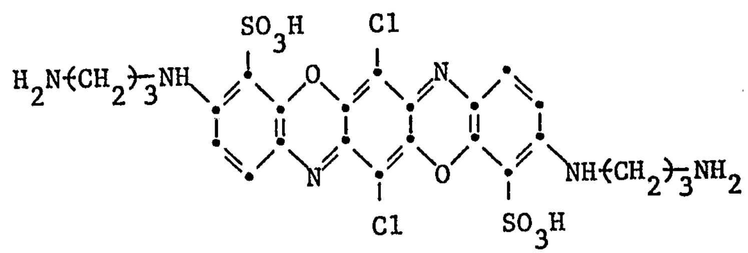 | blau |

Tabelle 2 (Fortsetzung)

| Nr. | Triazin-Verbindung | Chromophor | Farbton auf Baumwolle |
|---|---|---|---|
| 110 | 2-(4'-Amino-2',5'-disulfophenylamino)-4-chlor-6-isopropoxy-1,3,5-triazin | 1/2 Aequivalent 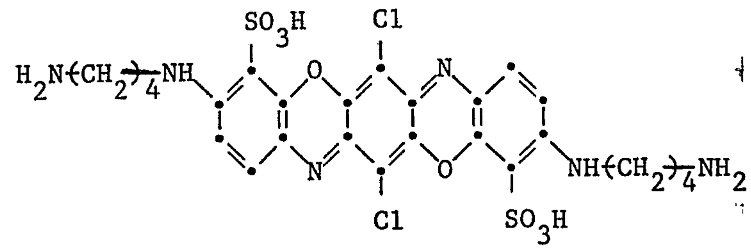 | blau |
| 111 | 2-(3'-Amino-4'-sulfophenylamino)-4-chlor-6-(β-äthoxyäthoxy)-1,3,5-triazin | 2-Aminonaphthalin-3,6,8-trisulfonsäure → 1-Amino-3-acetylaminobenzol | rotstichig gelb |
| 112 | 2-(3'-Amino-4'-sulfophenylamino)-4-chlor-6-(β-äthoxyäthoxy)-1,3,5-triazin | 2-Aminonaphthalin-3,6,8-trisulfonsäure → 3-Aminophenylharnstoff | rotstichig gelb |
| 113 | 2-(3'-Amino-4'-sulfophenylamino)-4-chlor-6-(β-äthoxyäthoxy)-1,3,5-triazin | 1-Amino-3-acetylaminobenzol-6-sulfonsäure → 1-Aethyl-3-sulfomethyl-4-methyl-6-hydroxy-pyridon-(2)-5-carbonsäureamid (verseift) | gelb |
| 114 | 2-(3'-Amino-4'-sulfophenylamino)-4-chlor-6-(β-äthoxyäthoxy)-1,3,5-triazin | 1-Amino-3-acetylaminobenzol-6-sulfonsäure → 1-Aethyl-3-aminocarbonyl-4-methyl-6-hydroxy-pyridon-(2) (verseift) | gelb |

Tabelle 2 (Fortsetzung)

| Nr. | Triazin-Verbindung | Chromophor | Farbton auf Baumwolle |
|---|---|---|---|
| 115 | 2-(3'-Amino-4'-sulfophenylamino)-4-chlor-6-(β-äthoxyäthoxy)-1,3,5-triazin | 2-Aminonaphthalin-1,5-disulfonsäure → 2-Acetylamino-5-hydroxynaphthalin-7-sulfonsäure (verseift) | orange |
| 116 | 2-(3'-amino-4'-sulfophenylamino)-4-chlor-6-(β-äthoxyäthoxy)-1,3,5-triazin | 2-Aminonaphthalin-3,6,8-trisulfonsäure → 2-Acetylamino-5-hydroxynaphthalin-7-sulfonsäure (verseift) | orange |
| 117 | 2-(3'-Amino-4'-sulfophenylamino)-4-chlor-6-(β-äthoxyäthoxy)-1,3,5-triazin | 1-Amino-4-methoxybenzol-2-sulfonsäure → 2-Amino-5-hydroxynaphthalin-7-sulfonsäure | scharlach |
| 118 | 2-(3'-Amino-4'-sulfophenylamino)-4-chlor-6-(β-äthoxyäthoxy)-1,3,5-triazin | 1-Amino-4-methoxybenzol-2-sulfonsäure → 2-Methylamino-5-hydroxynaphthalin-7-sulfonsäure | scharlach |
| 119 | 2-(3'-Amino-4'-sulfophenylamino)-4-chlor-6-(β-äthoxyäthoxy)-1,3,5-triazin | 1-Amino-3-acetylaminobenzol-6-sulfonsäure → 1-Benzoylamino-8-hydroxynaphthalin-3,6-disulfonsäure (verseift) | blaustichig rot |
| 120 | 2-(3'-Amino-4'-sulfophenylamino)-4-chlor-6-(β-äthoxyäthoxy)-1,3,5-triazin | 1-Amino-4-acetylaminobenzol-2-sulfonsäure → saure 2-Amino-8-hydroxynaphthalin-6-sulfonsäure (verseift) | blaustichig rot |
| 121 | 2-(3'-Amino-4'-sulfophenylamino)-4-chlor-6-(β-äthoxyäthoxy)-1,3,5-triazin | 1-Amino-3-acetylaminobenzol-6-sulfonsäure → 1-Amino-8-hydroxy-2-(4'-sulfophenylazo)-naphthalin-3,6-disulfonsäure (verseift) | blau |

Tabelle 2 (Fortsetzung)

| Nr. | Triazin-Verbindung | Chromophor | Farbton auf Baumwolle |
|---|---|---|---|
| 122 | 2-(3'-Amino-4'-sulfophenylamino)-4-chlor-6-(β-äthoxyäthoxy)-1,3,5-triazin | 1-Amino-3-acetylaminobenzol-6-sulfonsäure → 1-Amino-8-hydroxy-2-(2',5'-disulfophenylazo)-naphthalin-3,6-disulfonsäure (verseift) | blau |
| 123 | 2-(3'-Amino-4'-sulfophenylamino)-4-chlor-6-(β-äthoxyäthoxy)-1,3,5-triazin | N-(2-Carboxy-4-sulfophenyl)-N'-(2'-hydroxy-3'-amino-5'-sulfophenyl)-ms-phenylformazan (Cu-Komplex) | blau |
| 124 | 2-(3'-Amino-4'-sulfophenylamino)-4-chlor—6-(β-äthoxyäthoxy)-1,3,5-triazin | N-(2-Carboxy-5-sulfophenyl)-N'-(2'-hydroxy-3'-amino-5'-sulfophenyl)-ms-phenylformazan (Cu-Komplex) | blau |
| 125 | 2-(3'-Amino-4'-sulfophenylamino)-4-chlor-6-(β-äthoxyäthoxy)-1,3,5-triazin | 1/2 Aequivalent 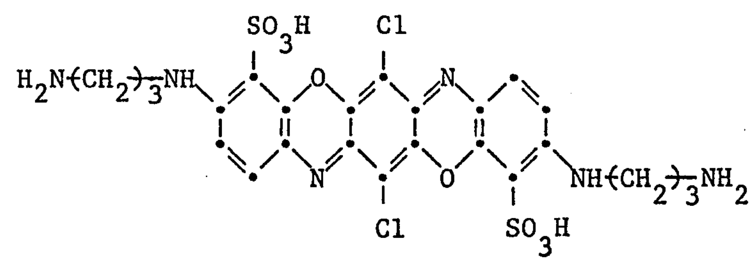 | blau |

Tabelle 2 (Fortsetzung)

| Nr. | Triazin-Verbindung | Chromophor | Farbton auf Baumwolle |
|---|---|---|---|
| 126 | 2-(3'-Amino-4'-sulfophenylamino)-4-chlor-6-(β-äthoxyäthoxy)-1,3,5-triazin | 1/2 Aequivalent 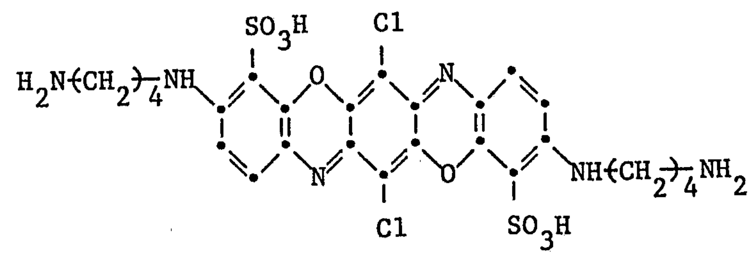 | blau |

Beispiel 5: 16,4 Teile des Farbstoffes der Formel

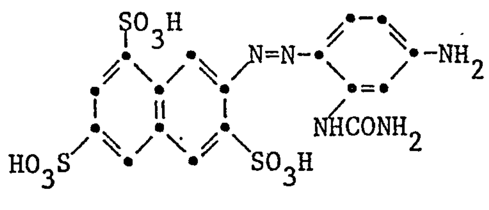

werden gemäss den Angaben in Beispiel 1 mit 2,4,6-Trifluor-1,3,5-triazin bei 0 bis 5° C umgesetzt. Nach Zusatz einer neutralen Lösung von 5,9 Teilen 1,3-Diaminobenzol-4-sulfonsäure in 100 ml Wasser wird die Temperatur innert 2 bis 3 Stunden auf 20 bis 25°C erhöht und dabei der pH der Reaktionsmischung durch ständige Zugabe von 2n Natriumhydroxydlösung bei 6,0 gehalten. Nach vollständiger Reaktion wird die Reaktionsmischung geklärt und das gebildete Zwischenprodukt bei pH 7,0 durch Einstreuen von Kaliumchlorid ausgesalzen, filtriert, gewaschen und im Vakuum getrocknet.

14,6 Teile des so erhaltenen Zwischenproduktes, das noch eine acylierbare Aminogruppe trägt, werden in 200 ml Wasser gelöst. Bei 45° C werden 4,0 Teile 2,4-Dichlor-6-isopropoxy-1,3,5-triazin innert 30 Minuten zugetropft, wobei der pH der Reaktionsmischung durch gleichzeitige Zugabe von 2n Natriumhydroxylösung bei 7,0 bis 7,5 gehalten wird. Nach vollständiger Reaktion wird der gebildete Reaktivfarbstoff der Formel

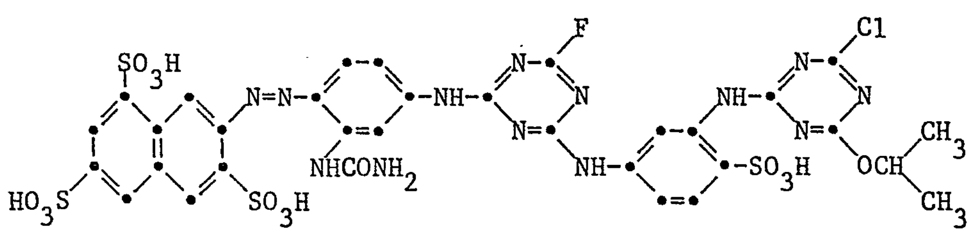

bei pH 7,0 durch Einstreuen von Kaliumchlorid ausgesalzen, filtriert, gewaschen und im Vakuum getrocknet. Er färbt Baumwolle in rotstichigen Gelbtönen und eignet sich besonders für Dreistufen-Färbeverfahren.

Weitere Reaktivfarbstoffe, die Baumwolle in den in Tabelle 3 Spalte 5 angegebenen Farbtönen färben, werden erhalten, wenn man die in Spalte 2 angegebenen aminogruppenhaltigen Chromophore gemäss den Angaben in Beispiel 5 zuerst mit 2,4,6-Trifluor-1,3,5-triazin und dann mit der in Spalte 3 angegebenen Diamino-Verbindung umsetzt. Die so erhaltenen Zwischenprodukte werden durch Umsatz mit der in Spalte 4 angegebenen Triazin-Verbindung gemäss den Angaben in Beispiel 5 in Reaktivfarbstoffe umgewandelt, die sich besonders für Dreistufen-Färbeverfahren eignen.

Tabelle 3

| Nr. | Chromophor | Diamino-Verbindung | Triazin-Verbindung | Farbton auf Baumwolle |
|---|---|---|---|---|
| 1 | 1-Amino-4-methoxybenzol-2-sulfonsäure ⟶ 2-Amino-5-hydroxynaphthalin-7-sulfonsäure | 1,3-Diaminobenzol-4-sulfonsäure | 2,4-Dichlor-6-isopropoxy-1,3,5-triazin | scharlach |
| 2 | do. | do. | 2,4-Dichlor-6-(β-äthoxyäthoxy)-1,3,5-triazin | do. |
| 3 | 1-Amino-3-acetylaminobenzol-6-sulfonsäure ⟶ 1-Amino-8-hydroxy-2-(4'-sulfophenylazo)-naphthalin-3,6-disulfonsäure, verseift | do. | do. | marineblau |
| 4 | do. | do. | 2,4-Dichlor-6-isopropoxy-1,3,5-triazin | do. |
| 5 | do. | 1,4-Diaminobenzol-2-sulfonsäure | do. | do. |
| 6 | N-(2-Carboxy-5-sulfophenyl)-N'-(2'-hydroxy-3'-amino-5'-sulfophenyl)-ms-phenylformazan, Cu-Komplex | 1,3-Diaminobenzol-4-sulfonsäure | do. | blau |
| 7 | do. | do. | 2,4-Dichlor-6-(β-äthoxyäthoxy)-1,3,5-triazin | do. |

Tabelle 3 (Fortsetzung)

| Nr. | Chromophor | Diamino-Verbindung | Triazin-Verbindung | Farbton auf Baumwolle |
|---|---|---|---|---|
| 8 | 2-Aminonaphthalin-3,6,8-trisulfonsäure ⟶ 1-Amino-3-methylbenzol | 1,3-Diaminobenzol-4-sulfonsäure | 2,4-Dichlor-6-isopropoxy-1,3,5-triazin | rotstichig gelb |
| 9 | 2-Aminonaphthalin-4,6,8-trisulfonsäure ⟶ 1-Amino-3-methylbenzol | 1,3-Diaminobenzol-4-sulfonsäure | 2,4-Dichlor-6-isopropoxy-1,3,5-triazin | rotstichig gelb |
| 10 | 2-Aminonaphthalin-4,6,8-trisulfonsäure ⟶ 1-Amino-3-acetylaminobenzol | 1,3-Diaminobenzol-4-sulfonsäure | 2,4-Dichlor-6-isopropoxy-1,3,5-triazin | rotstichig gelb |
| 11 | 1-Amino-4-(2',5'-disulfophenylazo)-naphthalin-6-sulfonsäure ⟶ 1-Amino-3-methylbenzol | 1,3-Diaminobenzol-4-sulfonsäure | 2,4-Dichlor-6-isopropoxy-1,3,5-triazin | braun |
| 12 | 1-Amino-4-(2',5'-disulfophenylazo)-naphthalin-6-sulfonsäure ⟶ 1-Aminonaphthalin-6-sulfonsäure | 1,3-Diaminobenzol-4-sulfonsäure | 2,4-Dichlor-6-isopropoxy-1,3,5-triazin | braun |
| 13 | 1-Amino-4-(4'-sulfophenylazo)-benzol-2-sulfonsäure ⟶ 1-Aminonaphthalin-6-sulfonsäure | 1,3-Diaminobenzol-4-sulfonsäure | 2,4-Dichlor-6-isopropoxy-1,3,5-triazin | braun |
| 14 | 1-Amino-4-(4',6',8'-trisulfonaphthyl-2'-azo)-naphthalin-6-sulfonsäure ⟶ 1-Amino-3-methylbenzol | 1,3-Diaminobenzol-4-sulfonsäure | 2,4-Dichlor-6-isopropoxy-1,3,5-triazin | braun |

Tabelle 3 (Fortsetzung)

| Nr. | Chromophor | Diamino-Verbindung | Triazin-Verbindung | Farbton auf Baumwolle |
|---|---|---|---|---|
| 15 | 1-Amino-4-(2',5'-disulfophenylazo)-naphthalin-6-sulfonsäure → 1-Amino-2,5-dimethylbenzol | 1,3-Diaminobenzol-4-sulfonsäure | 2,4-Dichlor-6-isopropoxy-1,3,5-triazin | braun |
| 16 | 1-Amino-3-acetylaminobenzol-6-sulfonsäure → 1-Aethyl-3-sulfomethyl-4-methyl-6-hydroxy-pyridon-(2)-5-carbonsäureamid (verseift) | 1,3-Diaminobenzol-4-sulfonsäure | 2,4-Dichlor-6-isopropoxy-1,3,5-triazin | gelb |
| 17 | 1-Amino-3-acetylaminobenzol-6-sulfonsäure → 1-Aethyl-3-aminocarbonyl-4-methyl-6-hydroxy-pyridon-(2) (verseift) | 1,3-Diaminobenzol-4-sulfonsäure | 2,4-Dichlor-6-isopropoxy-1,3,5-triazin | gelb |
| 18 | 1-Amino-3-acetylaminobenzol-6-sulfonsäure → 1-(2'-Methyl-4'-sulfophenyl)-3-carboxy-pyrazolon-(5) (verseift) | 1,3-Diaminobenzol-4-sulfonsäure | 2,4-Dichlor-6-isopropoxy-1,3,5-triazin | gelb |
| 19 | 1-Amino-3-acetylaminobenzol-6-sulfonsäure → 1-(4',8'-Disulfonaphthyl-[2'])-3-methyl-pyrazolon-(5) (verseift) | 1,3-Diaminobenzol 4-sulfonsäure | 2,4-Dichlor-6-isopropoxy-1,3,5-triazin | gelb |
| 20 | 2-Aminonaphthalin-1,5-disulfonsäure → 2-Acetylamino-5-hydroxynaphthalin-7-sulfonsäure (verseift) | 1,3-Diaminobenzol-4-sulfonsäure | 2,4-Dichlor-6-isopropoxy-1,3,5-triazin | orange |
| 21 | 2-Aminonaphthalin-3,6,8-trisulfonsäure → 2-Acetylamino-5-hydroxynaphthalin-7-sulfonsäure (verseift) | 1,3-Diaminobenzol 4-sulfonsäure | 2,4-Dichlor-6-iso propoxy-1,3,5-triazin | orange |

Tabelle 3 (Fortsetzung)

| Nr. | Chromophor | Diamino-Verbindung | Triazin-Verbindung | Farbton auf Baumwolle |
|---|---|---|---|---|
| 22 | 2-Aminonaphthalin-1,5,7-trisulfonsäure ⟶ 1-Acetylamino-5-hydroxynaphthalin-7-sulfonsäure (verseift) | 1,3-Diaminobenzol-4-sulfonsäure | 2,4-Dichlor-6-isopropoxy-1,3,5-triazin | orange |
| 23 | 1-Amino-4-methoxybenzol-2,5-disulfonsäure ⟶ 2-Amino-5-hydroxynaphthalin-7-sulfonsäure | 1,3-Diaminobenzol-4-sulfonsäure | 2,4-Dichlor-6-isopropoxy-1,3-5-triazin | scharlach |
| 24 | 1-Amino-4-methoxybenzol-2-sulfonsäure ⟶ 2-Methylamino-5-hydroxynaphthalin-7-sulfonsäure | 1,3-Diaminobenzol-4-sulfonsäure | 2,4-Dichlor-6-isopropoxy-1,3,5-triazin | scharlach |
| 25 | 1-Aminobenzol-2-sulfonsäure ⟶ 1-(4'-Nitrobenzoylamino)-8-hydroxynaphthalin-3,6-disulfonsäure (reduziert) | 1,3-Diaminobenzol-4-sulfonsäure | 2,4-Dichlor-6-isopropoxy-1,3,5-triazin | rot |
| 26 | 1-Amino-3-acetylaminobenzol-6-sulfonsäure ⟶ 1-Benzoylamino-8-hydroxynaphthalin-3,6-disulfonsäure (verseift) | 1,3-Diaminobenzol-4-sulfonsäure | 2,4-Dichlor-6-isopropoxy-1,3,5-triazin | blaustichig rot |
| 27 | 1-Amino-3-acetylaminobenzol-6-sulfonsäure ⟶ 1-Acetylamino-8-hydroxynaphthalin-3,6-disulfonsäure (verseift) | 1,3-Diaminobenzol-4-sulfonsäure | 2,4-Dichlor-6-isopropoxy-1,3,5-triazin | blaustichig rot |
| 28 | 1-Amino-3-acetylaminobenzol-6-sulfonsäure ⟶ 1-Benzoylamino-8-hydroxynaphthalin-4,6-disulfonsäure (verseift) | 1,3-Diaminobenzol-4-sulfonsäure | 2,4-Dichlor-6-isopropoxy-1,3,5-triazin | blaustichig rot |

Tabelle 3 (Fortsetzung)

| Nr. | Chromophor | Diamino-Verbindung | Triazin-Verbindung | Farbton auf Baumwolle |
|---|---|---|---|---|
| 29 | 1-Amino-3-acetylaminobenzol-6-sulfonsäure → 1-Acetylamino-8-hydroxynaphthalin-4,6-disulfonsäure (verseift) | 1,3-Diaminobenzol-4-sulfonsäure | 2,4-Dichlor-6-isopropoxy-1,3,5-triazin | blaustichig rot |
| 30 | 1-Amino-4-acetylaminobenzol-2-sulfonsäure → saure 2-Amino-8-hydroxynaphthalin-3,6-disulfonsäure (verseift) | 1,3-Diaminobenzol 4-sulfonsäure | 2,4-Dichlor-6-isopropoxy-1,3,5-triazin | blaustichig rot |
| 31 | 1-Amino-4-acetylaminobenzol-2-sulfonsäure → saure 2-Amino-8-hydroxynaphthalin-6-sulfonsäure (verseift) | 1,3-Diaminobenzol-4-sulfonsäure | 2,4-Dichlor-6-isopropoxy-1,3,5-triazin | blaustichig rot |
| 32 | 2-Aminonaphthalin-1,5-disulfonsäure → 1-Amino-8-hydroxynaphthalin-3,6-disulfonsäure | 1,3-Diaminobenzol-4-sulfonsäure | 2,4-Dichlor-6-isopropoxy-1,3,5-triazin | blaustichig rot |
| 33 | 3-Methoxy-4-amino-6-methylazobenzol-2',5'-disulfonsäure → 2-Methylamino-5-hydroxynaphthalin-7-sulfonsäure (entmethylierend gekupfert) | 1,3-Diaminobenzol-4-sulfonsäure | 2,4-Dichlor-6-isopropoxy-1,3,5-triazin | marineblau |
| 34 | 3-Methoxy-4-amino-6-methylazobenzol-2',4'-disulfonsäure → 2-Amino-5-hydroxynaphthalin-1,7-disulfonsäure (entmethylierend gekupfert) | 1,3-Diaminobenzol-4-sulfonsäure | 2,4-Dichlor-6-isopropoxy-1,3,5-triazin | marineblau |
| 35 | 1-Amino-3-acetylaminobenzol-6-sulfonsäure → 1-Amino-8-hydroxy-2-(2',5'-disulfophenylazo)-naphthalin-3,6-disulfonsäure (verseift) | 1,3-Diaminobenzol-4-sulfonsäure | 2,4-Dichlor-6-isopropoxy-1,3,5-triazin | blau |

Tabelle 3 (Fortsetzung)

| Nr. | Chromophor | Diamino-Verbindung | Triazin-Verbindung | Farbton auf Baumwolle |
|---|---|---|---|---|
| 36 | N-(2-Carboxy-4-sulfophenyl)-N'-(2'-hydroxy-3'-amino-5'-sulfophenyl)-ms-phenylformazan (Cu-Komplex) | 1,3-Diaminobenzol-4-sulfonsäure | 2,4-Dichlor-6-isopropoxy-1,3,5-triazin | blau |
| 37 | 1/2 Aequivalent 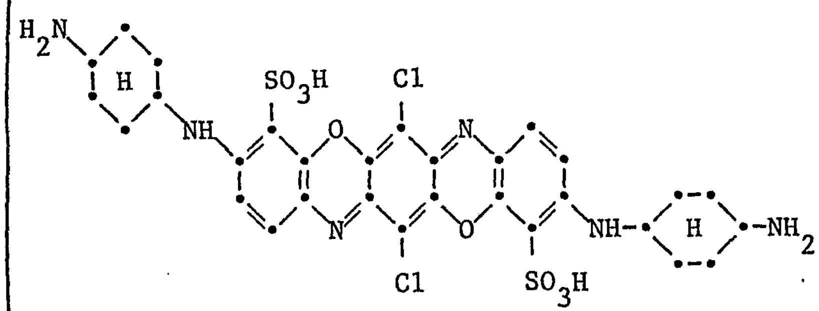 | 1,3-Diaminobenzol-4-sulfonsäure | 2,4-Dichlor-6-isopropoxy-1,3,5-triazin | blau |
| 38 | 1/2 Aequivalent 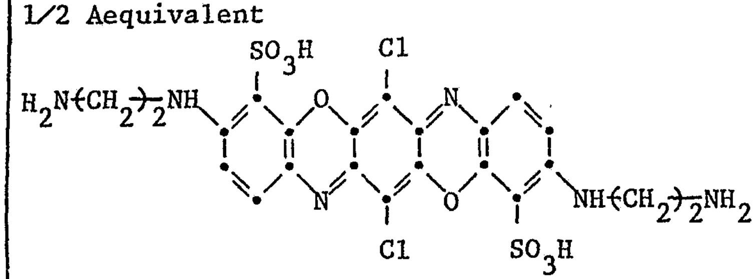 | 1,3-Diaminobenzol-4-sulfonsäure | 2,4-Dichlor-6-isopropoxy-1,3,5-triazin | blau |

Tabelle 3 (Fortsetzung)

| Nr. | Chromophor | Diamino-Verbindung | Triazin-Verbindung | Färbton auf Baumwolle |
|---|---|---|---|---|
| 39 | 1/2 Aequivalent 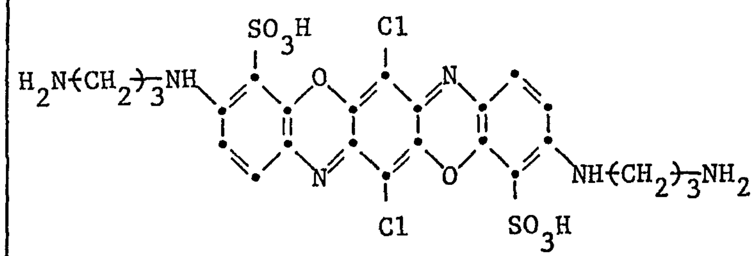 | 1,3-Diaminobenzol-4-sulfonsäure | 2,4-Dichlor-6-isopropoxy-1,3,5-triazin | blau |
| 40 | 1/2 Aequivalent 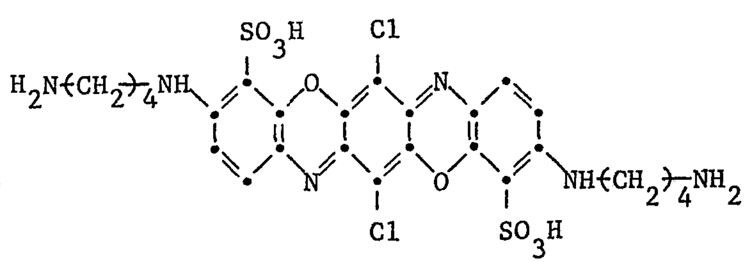 | 1,3-Diaminobenzol-4-sulfonsäure | 2,4-Dichlor-6-isopropoxy-1,3,5-triazin | blau |

Tabelle 3 (Fortsetzung)

| Nr. | Chromophor | Diamino-Verbindung | Triazin-Verbindung | Farbton auf Baumwolle |
|---|---|---|---|---|
| 41 | 2-Aminonaphthalin-3,6,8-trisulfonsäure → 3-Aminophenylharnstoff | 1,4-Diamino-benzol-2-sulfonsäure | 2,4-Dichlor-6-isopropoxy-1,3,5-triazin | rotstichig gelb |
| 42 | 2-Aminonaphthalin-3,6,8-trisulfonsäure → 1-Amino-3-methylbenzol | 1,4-Diamino-benzol-2-sulfonsäure | 2,4-Dichlor-6-isopropoxy-1,3,5-triazin | rotstichig gelb |
| 43 | 2-Aminonaphthalin-4,6,8-trisulfonsäure → 1-Amino-3-methylbenzol | 1,4-Diamino-benzol-2-sulfonsäure | 2,4-Dichlor-6-isopropoxy-1,3-5-triazin | rotstichig gelb |
| 44 | 2-Aminonaphthalin-4,6,8-trisulfonsäure → 1-Amino-3-acetylaminobenzol | 1,4-Diamino-benzol-2-sulfonsäure | 2,4-Dichlor-6-isopropoxy-1,3,5-triazin | rotstichig gelb |
| 45 | 1-Amino-4-(2',5'-disulfophenylazo)-naphthalin-6-sulfonsäure → 1-Amino-3-methylbenzol | 1,4-Diamino-benzol-2-sulfonsäure | 2,4-Dichlor-6-isopropoxy-1,3,5-triazin | braun |
| 46 | 1-Amino-4-(2',5'-disulfophenylazo)-naphthalin-6-sulfonsäure → 1-Aminonaphthalin-6-sulfonsäure | 1,4-Diamino-benzol-2-sulfonsäure | 2,4-Dichlor-6-isopropoxy-1,3,5-triazin | braun |
| 47 | 1-Amino-4-(4'-sulfophenylazo)-benzol-2-sulfonsäure → 1-Aminonaphthalin-6-sulfonsäure | 1,4-Diamino-benzol-2-sulfonsäure | 2,4-Dichlor-6-isopropoxy-1,3,5-triazin | braun |

Tabelle 3 (Fortsetzung)

| Nr. | Chromophor | Diamino-Verbindung | Triazin-Verbindung | Farbton auf Baumwolle |
|---|---|---|---|---|
| 48 | 1-Amino-4-(4',6',8'-trisulfonaphthyl-2'-azo)-naphthalin-6-sulfonsäure → 1-Amino-3-methylbenzol | 1,4-Diamino-benzol-2-sulfonsäure | 2,4-Dichlor-6-isopropoxy-1,3,5-triazin | braun |
| 49 | 1-Amino-4-(2',5'-disulfophenylazo)-naphthalin-6-sulfonsäure → 1-Amino-2,5-dimethylbenzol | 1,4-Diamino-benzol-2-sulfonsäure | 2,4-Dichlor-6-isopropoxy-1,3,5-triazin | braun |
| 50 | 1-Amino-3-acetylaminobenzol-6-sulfonsäure → 1-Aethyl-3-sulfomethyl-4-methyl-6-hydroxypyridon-(2)-5-carbonsäureamid (verseift) | 1,4-Diamino-benzol-2-sulfonsäure | 2,4-Dichlor-6-isopropoxy-1,3,5-triazin | gelb |
| 51 | 1-Amino-3-acetylaminobenzol-6-sulfonsäure → 1-Aethyl-3-aminocarbonyl-4-methyl-6-hydroxypyridon-(2) (verseift) | 1,4-Diamino-benzol-2-sulfonsäure | 2,4-Dichlor-6-isopropoxy-1,3,5-triazin | gelb |
| 52 | 1-Amino-3-acetylaminobenzol-6-sulfonsäure → 1-(2'-Methyl-4'-sulfophenyl)-3-carboxypyrazolon-(5) (verseift) | 1,4-Diamino-benzol-2-sulfonsäure | 2,4-Dichlor-6-isopropoxy-1,3,5-triazin | gelb |
| 53 | 1-Amino-3-acetylaminobenzol-6-sulfonsäure → 1-(4',8'-Disulfonaphthyl-[2'])-3-methylpyrazolon-(5) (verseift) | 1,4-Diamino-benzol-2-sulfonsäure | 2,4-Dichlor-6-isopropoxy-1,3,5-triazin | gelb |
| 54 | 2-Aminonaphthalin-1,5-disulfonsäure → 2-Acetylamino-5-hydroxynaphthalin-7-sulfonsäure (verseift) | 1,4-Diamino-benzol-2-sulfonsäure | 2,4-Dichlor-6-isopropoxy-1,3,5-triazin | orange |

Tabelle 3 (Fortsetzung)

| Nr. | Chromophor | Diamino-Verbindung | Triazin-Verbindung | Farbton auf Baumwolle |
|---|---|---|---|---|
| 55 | 2-Aminonaphthalin-3,6,8-trisulfonsäure → 2-Acetylamino-5-hydroxynaphthalin-7-sulfonsäure (verseift) | 1,4-Diamino-benzol-2-sulfonsäure | 2,4-Dichlor-6-isopropoxy-1,3,5-triazin | orange |
| 56 | 2-Aminonaphthalin-1,5,7-trisulfonsäure → 1-Acetylamino-5-hydroxynaphthalin-7-sulfonsäure (verseift) | 1,4-Diamino-benzol-2-sulfonsäure | 2,4-Dichlor-6-isopropoxy-1,3,5-triazin | orange |
| 57 | 1-Amino-4-methoxybenzol-2,5-disulfonsäure → 2-Amino-5-hydroxynaphthalin-7-sulfonsäure | 1,4-Diamino-benzol-2-sulfonsäure | 2,4-Dichlor-6-isopropoxy-1,3,5-triazin | scharlach |
| 58 | 1-Amino-4-methoxybenzol-2-sulfonsäure → 2-Amino-5-hydroxynaphthalin-7-sulfonsäure | 1,4-Diamino-benzol-2-sulfonsäure | 2,4-Dichlor-6-isopropoxy-1,3,5-triazin | scharlach |
| 59 | 1-Amino-4-methoxybenzol-2-sulfonsäure → 2-Methylamino-5-hydroxynaphthalin-7-sulfonsäure | 1,4-Diamino-benzol-2-sulfonsäure | 2,4-Dichlor-6-isopropoxy-1,3,5-triazin | scharlach |
| 60 | 1-Aminobenzol-2-sulfonsäure → 1-(4'-Nitrobenzoyl-amino)-8-hydroxynaphthalin-3,6-disulfonsäure (reduziert) | 1,4-Diamino-benzol-2-sulfonsäure | 2,4-Dichlor-6-isopropoxy-1,3,5-triazin | rot |
| 61 | 1-Amino-3-acetylaminobenzol-6-sulfonsäure → 1-Benzoylamino-8-hydroxynaphthalin-3,6-disulfonsäure (verseift) | 1,4-Diamino-benzol-2-sulfonsäure | 2,4-Dichlor-6-isopropoxy-1,3,5-triazin | blaustichig rot |

Tabelle 3 (Fortsetzung)

| Nr. | Chromophor | Diamino-Verbindung | Triazin-Verbindung | Farbton auf Baumwolle |
|---|---|---|---|---|
| 62 | 1-Amino-3-acetylaminobenzol-6-sulfonsäure → 1-Acetylamino-8-hydroxynaphthalin-3,6-disulfonsäure (verseift) | 1,4-Diamino-benzol-2-sulfonsäure | 2,4-Dichlor-6-isopropoxy-1,3,5-triazin | blaustichig rot |
| 63 | 1-Amino-3-acetylaminobenzol-6-sulfonsäure → 1-Benzoylamino-8-hydroxynaphthalin-4,6-disulfonsäure (verseift) | 1,4-Diamino-benzol-2-sulfonsäure | 2,4-Dichlor-6-isopropoxy-1,3,5-triazin | blaustichig rot |
| 64 | 1-Amino-3-acetylaminobenzol-6-sulfonsäure → 1-Acetylamino-8-hydroxynaphthalin-4,6-disulfonsäure (verseift) | 1,4-Diamino-benzol-2-sulfonsäure | 2,4-Dichlor-6-isopropoxy-1,3,5-triazin | blaustichig rot |
| 65 | 1-Amino-4-acetylaminobenzol-2-sulfonsaure → 2-Amino-8-hydroxynaphthalin-3,6-disulfonsäure (verseift) | 1,4-Diamino-benzol-2-sulfonsäure | 2,4-Dichlor-6-isopropoxy-1,3,5 triazin | blaustichig rot |
| 66 | 1-Amino-4-acetylaminobenzol-2-sulfonsaure → 2-Amino-8-hydroxynaphthalin-6-sulfonsäure (verseift) | 1,4-Diamino-benzol-2-sulfonsäure | 2,4-Dichlor-6-isopropoxy-1,3,5-triazin | blaustichig rot |
| 67 | 2-Aminonaphthalin-1,5-disulfonsäure → 1-Amino-8-hydroxynaphthalin-3,6-disulfonsäure | 1,4-Diamino-benzol-2-sulfonsäure | 2,4-Dichlor-6-isopropoxy-1,3,5 triazin | blaustichig rot |
| 68 | 3-Methoxy-4-amino-6-methylazobenzol-2',5'-disulfonsäure → 2-Methylamino-5-hydroxynaphthalin-7-sulfonsäure (entmethylierend gekupfert) | 1,4-Diamino-benzol-2-sulfonsäure | 2,4-Dichlor-6-isopropoxy-1,3,5-triazin | marineblau |

Tabelle 3 (Fortsetzung)

| Nr. | Chromophor | Diamino-Verbindung | Triazin-Verbindung | Farbton auf Baumwolle |
|---|---|---|---|---|
| 69 | 3-Methoxy-4-amino-6-methylazobenzol-2',4'-disulfonsäure → 2-Amino-5-hydroxynaphthalin-1,7-disulfonsäure (entmethylierend gekupfert) | 1,4-Diamino-benzol-2-sulfonsäure | 2,4-Dichlor-6-isopropoxy-1,3,5-triazin | marineblau |
| 70 | 1-Amino-3-acetylaminobenzol-6-sulfonsäure → 1-Amino-8-hydroxy-2-(2',5'-disulfophenylazo)-naphthalin-3,6-disulfonsäure (verseift) | 1,4-Diamino-benzol-2-sulfonsäure | 2,4-Dichlor-6-isopropoxy-1,3,5-triazin | blau |
| 71 | N-(2-Carboxy-4-sulfophenyl)-N'-(2'-hydroxy-3'-amino-5'-sulfophenyl)-ms-phenylformazan (Cu-Komplex) | 1,4-Diamino-benzol-2-sulfonsäure | 2,4-Dichlor-6-isopropoxy-1,3,5-triazin | blau |
| 72 | N-(2-Carboxy-5-sulfophenyl)-N'-(2'-hydroxy-3'-amino-5'-sulfophenyl)-ms-phenylformazan (Cu-Komplex) | 1,4-Diamino-benzol-2-sulfonsäure | 2,4-Dichlor-6-isopropoxy-1,3,5-triazin | blau |
| 73 | 1/2 Aequivalent 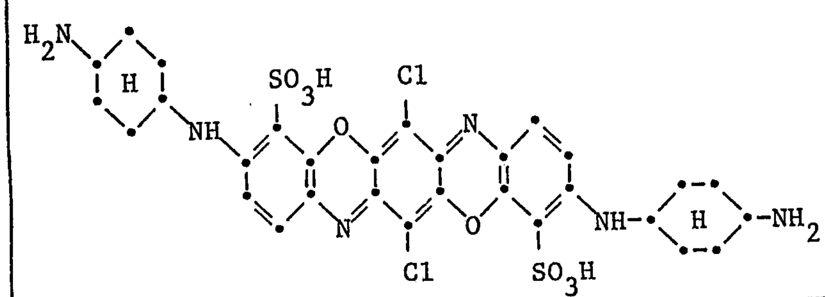 | 1,4-Diamino-benzol-2-sulfonsäure | 2,4-Dichlor-6-isopropoxy-1,3,5-triazin | blau |

Tabelle 3 (Fortsetzung)

| Nr. | Chromophor | Diamino-Verbindung | Triazin-Verbindung | Farbon auf Baumwolle |
|---|---|---|---|---|
| 74 | 1/2 Aequivalent 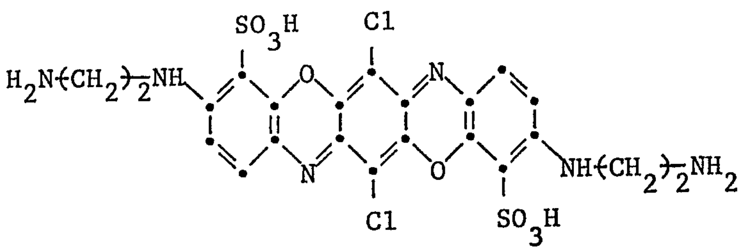 | 1,4-Diamino-benzol-2-sulfonsäure | 2,4-Dichlor-6-isopropoxy-1,3,5-triazin | blau |
| 75 | 1/2 Aequivalent 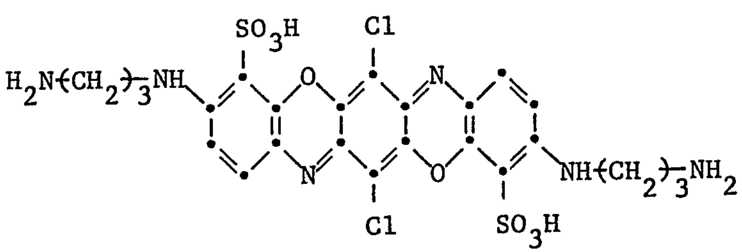 | 1,4-Diamino-benzol-2-sulfonsäure | 2,4-Dichlor-6-isopropoxy-1,3,5-triazin | blau |

Tabelle 3 (Fortsetzung)

| Nr. | Chromophor | Diamino-Verbindung | Triazin-Verbindung | Farbton auf Baumwolle |
|---|---|---|---|---|
| 76 | 1/2 Aequivalent 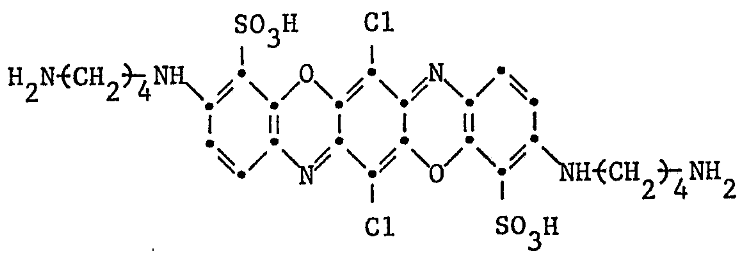 | 1,4-Diamino-benzol-2-sulfonsäure | 2,4-Dichlor-6-isopropoxy-1,3,5-triazin | blau |
| 77 | 2-Aminonaphthalin-3,6,8-trisulfonsäure → 1-Amino-3-acetylaminobenzol | 1,3-Diaminobenzol-4-sulfonsäure | 2,4-Dichlor-6-(β-äthoxyäthoxy)-1,3,5-triazin | rotstichig gelb |
| 78 | 2-Aminonaphthalin-3,6,8-trisulfonsäure → 3-Aminophenylharnstoff | 1,3-Diaminobenzol-4-sulfonsäure | 2,4-Dichlor-6-(β-äthoxyäthoxy)-1,3,5-triazin | rotstichig gelb |
| 79 | 1-Amino-3-acetylaminobenzol-6-sulfonsäure → 1-Aethyl-3-sulfomethyl-4-methyl-6-hydroxy-pyridon-(2)-5-carbonsäureamid (verseift) | 1,3-Diaminobenzol-4-sulfonsäure | 2,4-Dichlor-6-(β-äthoxyäthoxy)-1,3,5-triazin | gelb |
| 80 | 1-Amino-3-acetylaminobenzol-6-sulfonsäure → 1-Aethyl-3-aminocarbonyl-4-methyl-6-hydroxy-pyridon-(2) (verseift) | 1,3-Diaminobenzol-4-sulfonsäure | 2,4-Dichlor-6-(β-äthoxyäthoxy)-1,3,5-triazin | gelb |

Tabelle 3 (Fortsetzung)

| Nr. | Chromophor | Diamino-Verbindung | Triazin-Verbindung | Farbton auf Baumwolle |
|---|---|---|---|---|
| 81 | 2-Aminonaphthalin-1,5-disulfonsäure → 2-Acetylamino-5-hydroxynaphthalin-7-sulfonsäure (verseift) | 1,3-Diaminobenzol-4-sulfonsäure | 2,4-Dichlor-6-(β-äthoxyäthoxy)-1,3,5-triazin | orange |
| 82 | 2-Aminonaphthalin-3,6,8-trisulfonsäure → 2-Acetylamino-5-hydroxynaphthalin-7-sulfonsäure (verseift) | 1,3-Diaminobenzol-4-sulfonsäure | 2,4-Dichlor-6-(β-äthoxyäthoxy)-1,3,5-triazin | orange |
| 83 | 1-Amino-4-methoxybenzol-2-sulfonsäure → 2-Methylamino-5-hydroxynaphthalin-7-sulfonsäure | 1,3-Diaminobenzol-4-sulfonsäure | 2,4-Dichlor-6-(β-äthoxyäthoxy)-1,3,5-triazin | scharlach |
| 84 | 1-Amino-3-acetylaminobenzol-6-sulfonsäure → 1-Benzoylamino-8-hydroxynaphthalin-3,6-disulfonsäure (verseift) | 1,3-Diaminobenzol-4-sulfonsäure | 2,4-Dichlor-6-(β-äthoxyäthoxy)-1,3,5-triazin | blaustichig rot |
| 85 | 1-Amino-4-acetylaminobenzol-2-sulfonsäure → saure 2-Amino-8-hydroxynaphthalin-6-sulfonsäure (verseift) | 1,3-Diaminobenzol-4-sulfonsäure | 2,4-Dichlor-6-(β-äthoxyäthoxy)-1,3,5-triazin | blaustichig rot |
| 86 | 1-Amino-3-acetylaminobenzol-6-sulfonsäure → 1-Amino-8-hydroxy-2-(2',5'-disulfophenylazo)-naphthalin-3,6-disulfonsäure (verseift) | 1,3-Diaminobenzol-4-sulfonsäure | 2,4-Dichlor-6-(β-äthoxyäthoxy)-1,3,5-triazin | blau |
| 87 | N-(2-Carboxy-4-sulfophenyl)-N'-(2'-hydroxy-3'-amino-5'-sulfophenyl)-ms-phenylformazan (Cu-Komplex) | 1,3-Diaminobenzol-4-sulfonsäure | 2,4-Dichlor-6-(β-äthoxyäthoxy)-1,3,5-triazin | blau |

Tabelle 3 (Fortsetzung)

| Nr. | Cheomophor | Diamino-Verbindung | Triazin-Verbindung | Farbton auf Baumwolle |
|---|---|---|---|---|
| 88 | 1/2 Aequivalent 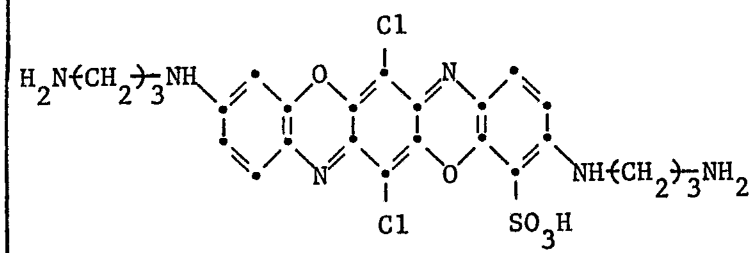 | 1,3-Diaminobenzol-4-sulfonsäure | 2,4-Dichlor-6-(β-äthoxyäthoxy)-1,3,5-triazin | blau |
| 89 | 1/2 Aequivalent 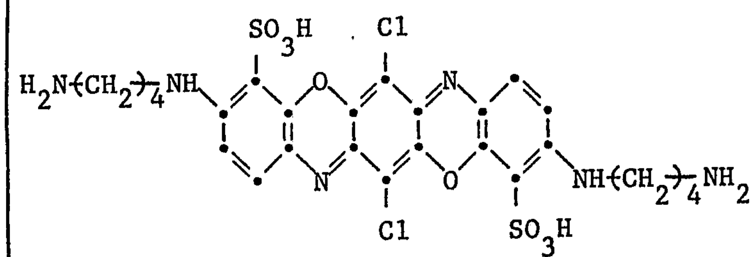 | 1,3-Diaminobenzol-4-sulfonsäure | 2,4-Dichlor-6-(β-äthoxyäthoxy)-1,3,5-triazin | blau |

Beispiel 6: 16,0 Teile 1-Amino-8-hydroxynaphthalin-3,6-disulfonsäure werden in 400 ml Wasser neutral gelöst und die Lösung auf 0 bis 5° C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxydlösung schwach kongosauer gehalten wird. Nach Zusatz einer auf pH 5,0 gestellten Mischung von 9,9 Teilen 1,3-Diaminobenzol-4-sulfonsäure und 50 ml Wasser wird der pH der Reaktionsmischung durch ständige Zugabe von 2n Natriumhydroxydlösung zuerst kurze Zeit schwach kongosauer und dann bei 5,0 gehalten. Dabei wird die Temperatur innert 2 bis 3 Stunden auf 20 bis 25° C erhöht. Nach vollständiger Reaktion wird dieses Farbstoffzwischenprodukt bei 0 bis 10° C und pH 5,0 mit 15,2 Teilen diazotierter 2-Aminonaphthalin-1,5-disulfonsäure gekuppelt. Nach vollständiger Kupplungsreaktion bei pH 6,5 wird die Reaktionsmischung geklärt und das gebildete Zwischenprodukt der Formel

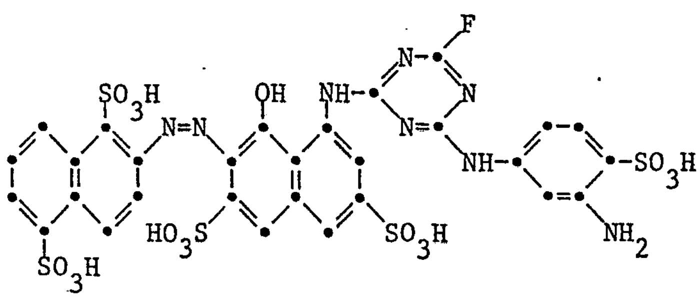

durch Einstreuen von Natriumchlorid ausgesalzen, filtriert und im Vakuum getrocknet.

Gemäss den Angaben in Beispiel 5 wird das so erhaltene Zwischenprodukt durch Umsatz mit 2,4-Dichlor-6-isopropoxy-1,3,5-triazin in den Reaktivfarbstoff der Formel

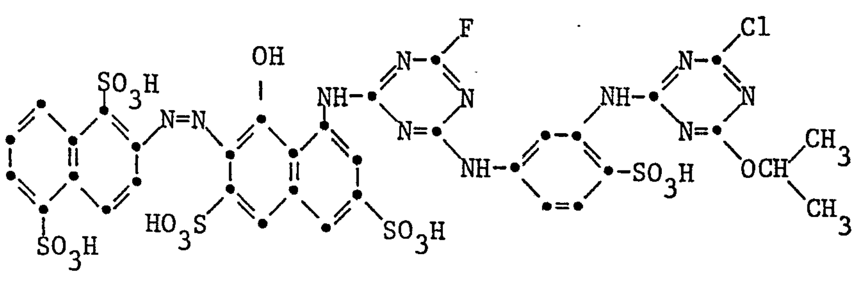

umgewandelt. Er färbt Baumwolle in blaustichigen Rottönen und eignet sich besonders für Dreistufen-Färbeverfahren.

Elementaranalyse einer 68,1 prozentigen Charge:

| | | | | | |
|---|---|---|---|---|---|
| berechnet: | C 26,3 % | N 9,6 % | S 10,0 % | Cl 2,2 % | F 1,2 % |
| gefunden: | C 26,3 % | N 9,6 % | S 10,1 % | Cl* 1,9 % | F** 1,1 %. |

Weitere Reaktivfarbstoffe mit analogen Eigenschaften werden erhalten, wenn man in Beispiel 6 1,3-Diaminobenzol-4-sulfonsäure durch 1,4-Diaminobenzol-2-sulfonsäure und/oder 2,4-Dichlor-6-isopropoxy-1,3,5-triazin durch 2,4-Dichlor-6-(β-äthoxyäthoxy)-1,3,5-triazin ersetzt.

Herstellung von 2-(3'-Amino-4'-sulfophenylamino)-4-chlor-6-isopropoxy-1,3,5-triazin

94,0 Teile 1,3-Diaminobenzol-4-sulfonsäure werden in 400 ml Wasser gegeben. Bei 25° C und pH 6,0 werden 104,0 Teile 2,4-Dichlor-6-isopropoxy-1,3,5-triazin innert 2 bis 3 Stunden zugetropft, wobei der pH der Reaktionsmischung durch gleichzeitige Zugabe von 2n Natriumhydroxydlösung auf 6,0 gehalten wird. Nach vollständiger Reaktion wird die Reaktionsmischung geklärt und das Zwischenprodukt durch Einstreuen von Natriumchlorid ausgesalzen, filtriert, gewaschen und im Vakuum getrocknet.

Elementaranalyse einer 68,9 prozentigen Charge:

| | | | | |
|---|---|---|---|---|
| berechnet: | C 27,6 % | H 2,7 % | N 13,4 % | Cl 6,8 % |
| gefunden: | C 27,6 % | H 2,9 % | N 13,6 & | Cl* 6,4 %. |

Analog obiger Herstellungsvorschrift wird das Zwischenprodukt der Formel

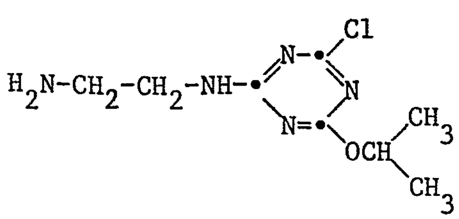

erhalten.

Elementaranalyse einer 80,8 prozentigen Charge:

| | | | |
|---|---|---|---|
| berechnet: | C 33,5 % | H 4,9 % | Cl 12,4 % |
| gefunden: | C 33,5 % | H 4,7 % | Cl* 12,0 %. |

Gemäss den Angaben in obiger Herstellungsvorschrift werden die übrigen erwähnten Zwischenprodukte durch Kondensation der entsprechenden Diamino-Verbindungen mit 2,4-Dichlor-6-isopropoxy-1,3,5-triazin oder 2,4-Dichlor-6-β-äthoxyäthoxy-1,3,5-triazin erhalten.

Färbevorschrift I: 2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet.

Danach imprägniert man das Gewebe mit einer 20°C warmen Lösung, die pro Liter 4 Gramm Natriumhydroxyd und 300 Gramm Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift II: 2 Teile des gemäss Beispiel 1 erhaltenen Farbstoffes werden in 400 Teilen Wasser gelöst, dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift III: 4 Teile des gemäss Beispiel 6 erhaltenen Farbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift IV: 2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift V: 6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Druckvorschrift: 3 Teile des gemäss Beispiel 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Patentansprüche

1. Reaktivfarbstoffe der Formel

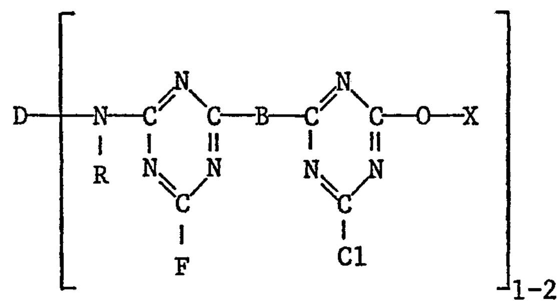 (1)

worin D der Rest eines sulfogruppenhaltigen organischen Farbstoffes der Mono- oder Polyazo-, Metallkomplexazo-, Anthrachinon-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe, R Wasserstoff oder gegebenenfalls substituiertes $C_{1-4}$-Alkyl, B ein Brückenglied der Formel

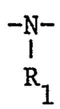 , 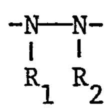 oder 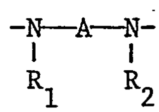

$R_1$ und $R_2$ unabhängig voneinander Wasserstoff oder gegebenenfalls substituiertes $C_{1-4}$-Alkyl oder Phenyl, A ein gegebenenfalls substituiertes aliphatisches oder aromatisches Brückenglied, und X ein gegebenenfalls substituierter $C_{1-6}$-Alkylrest ist.

2. Reaktivfarbstoffe gemäss Anspruch 1, worin B ein Brückenglied der Formel

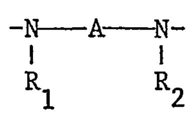

ist, und D, R, $R_1$, $R_2$, A und X die in Anspruch 1 angegebenen Bedeutungen haben.

3. Reaktivfarbstoffe gemäss Anspruch 2, worin D die in Anspruch 2 angegebene Bedeutung hat, und R Wasserstoff, Methyl oder Aethyl, $R_1$ und $R_2$ Wasserstoff, A $C_{2-6}$-Alkylen oder gegebenenfalls substituiertes Phenylen, und X $C_{1-6}$-Alkyl oder $C_{1-4}$-Alkoxy-$C_{1-4}$-alkyl ist.

4. Reaktivfarbstoffe gemäss Anspruch 3, der Formel

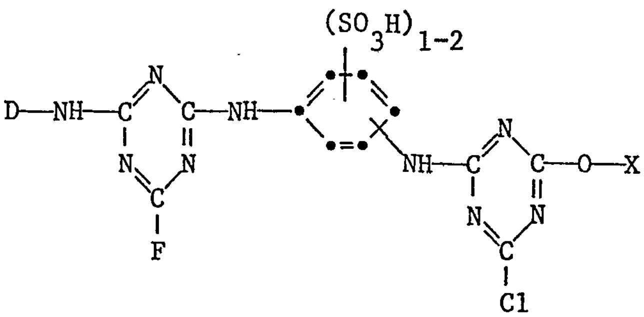

(2) ,

worin D und X die in Anspruch 3 angegebenen Bedeutungen haben.

5. Reaktivfarbstoffe gemäss Anspruch 3, der Formel

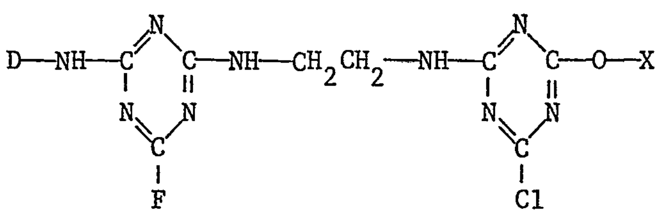

(3) ,

worin D und X die in Anspruch 3 angegebenen Bedeutungen haben.

6. Reaktivfarbstoffe gemäss Anspruch 4 oder 5, worin X Isopropyl oder β-Aethoxyäthyl ist.

7. Reaktivfarbstoffe gemäss einem der Ansprüche 2 bis 6, worin D der Rest eines Mono- oder Disazofarbstoffes ist.

8. Reaktivfarbstoffe gemäss einem der Ansprüche 2 bis 6, worin D der Rest eines Metallkomplexazo- oder Formazanfarbstoffes ist.

9. Reaktivfarbstoffe gemäss einem der Ansprüche 2 bis 6, worin D der Rest eines Anthrachinonfarbstoffes ist.

10. Reaktivfarbstoffe gemäss Anspruch 8, worin D der Rest eines Metallkomplexazofarbstoffes der Benzol- oder Naphthalinreihe ist.

11. Reaktivfarbstoffe gemäss Anspruch 10, worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

12. Reaktivfarbstoffe gemäss Anspruch 7, der Formel

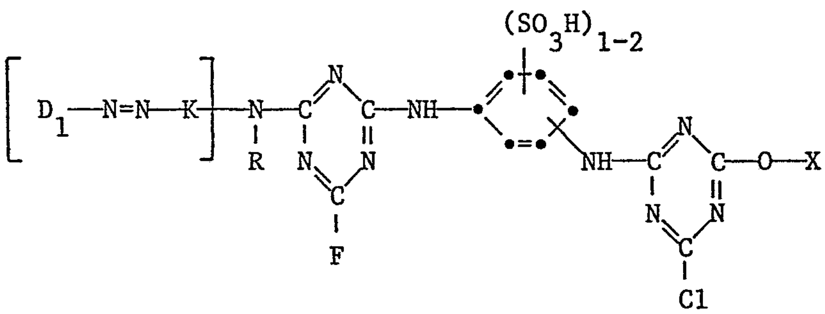

(4) ,

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff oder gegebenenfalls substituiertes $C_{1-4}$-Alkyl, und X Isopropyl oder β-Aethoxyäthyl ist, und der Reaktivrest an die Diazokomponente oder an die Kupplungskomponente gebunden ist.

13. Reaktivfarbstoffe gemäss Anspruch 12, worin R Wasserstoff oder Methyl ist.

14. Verfahren zur Herstellung von Reaktivfarbstoffen gemäss Anspruch 1, dadurch gekennzeichnet, dass man einen organischen Farbstoff der Formel

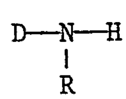

(5)

oder ein Farbstoffvorprodukt, 2,4,6-Trifluor-s-triazin, eine Verbindung der Formel

H—B—H (6)

und eine Verbindung der Formel

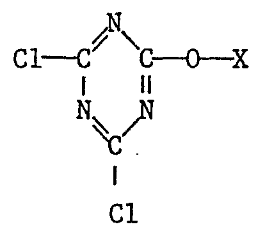

(7)

kondensiert, wobei D, R, B und X in den oben genannten Formeln die in Anspruch 1 angegebenen Bedeutungen haben, und dass man im Falle der Verwendung von Farbstoffvorprodukten, die erhaltenen Zwischenverbindungen in die gewünschten Endfarbstoffe umwandelt.

15. Verwendung der Reaktivfarbstoffe gemäss den Ansprüchen 1 bis 13, bzw. der gemäss Anspruch 14 erhaltenen Reaktivfarbstoffe zum Färben und Bedrucken.

16. Verwendung gemäss Anspruch 15 zum Färben von Cellulosefasern.

17. Die gemäss Anspruch 14 erhältlichen Reaktivfarbstoffe.

18. Das gemäss Anspruch 15 oder 16 gefärbte oder bedruckte Material, insbesondere das Textilmaterial.